# EUROPÄISCHE PATENTSCHRIFT

(11) **EP 3 659 232 B1**
(45) Veröffentlichungstag und Bekanntmachung des Hinweises auf die Patenterteilung: **06.03.2024**
(21) Anmeldenummer: 18746679.2
(22) Anmeldetag: 26.07.2018
(51) Int. Cl.: H02J 1/10, B60L 53/31, B60L 53/62, B60L 53/67, H02J 7/00, H02J 7/02

(54) **LADESTATION MIT DYNAMISCHER LADESTROMVERTEILUNG**
CHARGING STATION HAVING DYNAMIC CHARGING CURRENT DISTRIBUTION
STATION DE CHARGE À DISTRIBUTION DYNAMIQUE DE COURANT DE CHARGE

(30) Priorität: 26.07.2017 DE 102017116887
(43) Veröffentlichungstag der Anmeldung: 03.06.2020
(73) Patentinhaber: Wobben Properties GmbH, 26607 Aurich (DE)
(72) Erfinder: BROMBACH, Johannes, 13437 Berlin (DE); STRAFIEL, Christian, 26607 Aurich (DE); GERTJEGERDES, Stefan, 26603 Aurich (DE)
(74) Vertreter: Eisenführ Speiser
(86) Internationale Anmeldenummer: PCT/EP2018/070293
(87) Internationale Veröffentlichungsnummer: WO 2019/020747

(56) Entgegenhaltungen:
- WO-A1-2013/137501
- DE-A1-102011 079 430
- DE-A1-102012 218 738
- JP-A- 2013 027 236
- KR-A- 20110 137 675
- US-A1- 2004 130 292
- US-A1- 2013 057 209
- US-A1- 2013 069 592

## Beschreibung

Die vorliegende Erfindung betrifft eine Ladestation zum Laden mehrerer Elektrofahrzeuge, insbesondere Elektroautomobile. Die vorliegende Erfindung betrifft auch ein Verfahren zum Laden mehrerer Elektrofahrzeuge.

Mit steigender Anzahl im Straßenverkehr zugelassener Elektrofahrzeuge ist zukünftig damit zu rechnen, dass ein flächendeckender Ausbau der Infrastruktur zum Laden von Elektrofahrzeugen benötigt wird. Eine besondere Anforderung an eine Ladeinfrastruktur ist es dabei, die Elektrofahrzeuge in möglichst kurzer Zeit aufladen zu können. Insbesondere in Gebieten mit einem hohen Aufkommen an Elektrofahrzeugen kann mit einem besonders hohen Bedarf an Schnellladesystemen gerechnet werden. Beispiele für solche Gebiete sind Autobahnraststätten oder Innenstadtbereiche in einer Großstadt, in denen keine langen Standzeiten von den Elektrofahrzeugen erwünscht sind.

Beim Aufbau bzw. der Auslegung einer Ladestation treten dabei technologische Herausforderungen auf, denen begegnet werden muss. Ein Problem beim Betreiben einer Ladestation zum Laden von Elektrofahrzeugen ist zum Beispiel, dass unterschiedliche Fahrzeugtypen die an die Ladesäulen bzw. Ladeterminals der Ladestation angeschlossen werden, sehr unterschiedliche Anforderungen an den Ladestrom und die Ladespannungen aufweisen. Bei einigen Fahrzeugtypen kann beispielsweise ein sehr hoher Ladestrom bei einer Schnellladung benötigt werden, der aber auch schnell wieder absinkt. Bei anderen Fahrzeugtypen wird hingegen ein relativ konstanter Strom über einen längeren Zeitraum benötigt. Da die Ladeterminals in der Regel darauf ausgelegt sind alle Fahrzeugtypen laden zu können, wäre eine Ladesäule somit im Mittel nur relativ schwach ausgelastet. Das Ladeterminal würde dann nämlich nicht immer seinen maximalen Ladestrom an ein Elektrofahrzeug abgegeben, weil das Elektrofahrzeug ihn nicht oder nur zeitweise anfordert.

Das Deutsche Patent- und Markenamt hat in der Prioritätsanmeldung zu vorliegender Anmeldung folgenden Stand der Technik recherchiert: US 2010/0106631 A1, US 2013/0057209 A1, US 2014/0320083 A1, JP H05-276673 A, WO 2013/137501 A1.

Das Dokument WO 2013/137501 A1 betrifft eine Ladestation mit einem einseitigen Rauschfilter, einem Leistungsfaktorkorrekturabschnitt und mehreren DC/DC-Umrichtern, die mit dem Leistungsfaktorkorrekturabschnitt verbunden sind. Die DC/DC-Umrichter umfassen einen großen Ladeanschluss, einen mittelgroßen Ladeanschluss und einen normalen Ladeanschluss. Das Dokument KR 2011-0137675 A betrifft eine ähnliche Ladestation wie das genannte Dokument WO 2013/137501 A1.

Die US-amerikanische Offenlegungsschrift US 2013/0069592 A1 betrifft ein Ladesystem für Elektrofahrzeuge mit mehreren Ladeanschlüssen die jeweils ein Interface zum Leistungsaustausch mit wenigstens einem Elektrofahrzeug aufweisen, sowie mehrere Leistungsumrichter und eine schaltbare Verbindungsmatrix zum Verbinden wenigstens eines Leistungsumrichters mit wenigstens einem Ladeanschluss. Zudem ist eine Steuerung zum Steuern vorgesehen und ein Kommunikationsmittel zum Austauschen von Parametern mit dem wenigstens einem Elektrofahrzeug.

Das Dokument JP 2013 027236 A betrifft ein Batterieladesystem mit einer Vielzahl von Ladegeräten, und einer Steuervorrichtung zur Steuerung der Vielzahl von Ladegeräten, wobei die Steuereinheit die Anzahl der Ladegeräte zur Energieversorgung entsprechend der erforderlichen Leistung, die aus der Restkapazität der Batterie und der Nennausgangsleistung des Ladegeräts bestimmt wird, ändert.

Aufgabe der vorliegenden Erfindung ist es somit, zumindest eines der oben genannten Probleme zu adressieren. Insbesondere soll eine Lösung vorgeschlagen werden, die zumindest eine bessere Auslastung der Ladeterminals in der Ladestation ermöglicht. Zumindest soll zu bisher bekannten Lösungen eine alternative Lösung vorgeschlagen werden.

Erfindungsgemäß wird somit eine Ladestation nach Anspruch 1 vorgeschlagen. Diese ist zum Laden mehrerer Elektrofahrzeuge, insbesondere Elektroautomobile, vorgesehen. Erfindungsgemäß wird auch ein Verfahren nach Anspruch 12 vorgeschlagen. Ausführungsbeispiele sind in der Unteransprüchen weiter definiert.

Somit umfasst die Ladestation eine Versorgungseinrichtung, insbesondere zum Anschließen an ein elektrisches Versorgungsnetz, um die Ladestation mit elektrischer Leistung zu versorgen. Die Ladestation bezieht somit elektrische Leistung bzw. elektrische Energie aus dem elektrischen Versorgungsnetz und stellt sie den Ladeterminals bereit. Dazu kann die Versorgungseinrichtung an ein elektrisches Versorgungsnetz angeschlossen sein, insbesondere über einen Transformator. Zudem kann in der Versorgungseinrichtung ein Gleichrichter vorgesehen, um aus dem elektrischen Versorgungsnetz bezogenen Wechselstrom gleichzurichten und den Ladeterminals bereitzustellen. Die Versorgungseinrichtung kann auch einen Energiespeicher, insbesondere eine Batterie aufweisen, um elektrische Energie zu puffern.

Neben der Versorgungseinrichtung umfasst die Ladestation zudem mehrere Ladeterminals. Die Ladeterminals, die besonders auch als Ladesäule ausgebildet werden können, sind feststehende Terminals, an denen - ähnlich zu Tanksäulen einer herkömmlichen Tankstelle - die Elektrofahrzeuge über ein Ladekabel zum Laden angeschlossen werden können. Es ist bevorzugt vorgesehen, dass auch mehrere Elektrofahrzeuge an ein Ladeterminal angeschlossen werden können. Das Anschließen kann dabei auch gleichzeitig erfolgen. Gemäß einer Ausführungsform können zwei Elektrofahrzeuge gleichzeitig zum Laden an dasselbe Ladeterminal angeschlossen werden.

Jedes Ladeterminal umfasst dabei einen Versorgungseingang, der synonym auch als Versorgungseingangsbereich bezeichnet werden kann, zum Beziehen elektrischer Leistung von der Versorgungseinrichtung. Das kann direkt oder indirekt erfolgen. Somit ist jedes Ladeterminal elektrisch mit der Versorgungseinrichtung gekoppelt und bezieht eine von der Versorgungseinrichtung bereitgestellte Leistung am Versorgungseingang.

Neben dem Versorgungseingang umfasst jedes Ladeterminal zudem einen Ladeausgang, der synonym auch als Ladeausgangsbereich bezeichnet werden kann, mit einem oder mehreren Ladeanschlüssen zum Abgeben jeweils eines Ladestroms zum Laden jeweils eines angeschlossenen Elektrofahrzeuges. Es wird also vorgeschlagen, dass jedes Ladeterminal wenigstens einen Ladeanschluss aufweist, wobei an jeden Ladeanschluss jeweils ein Elektrofahrzeug angeschlossen werden kann. Die Anzahl der Ladeanschlüsse entspricht somit der Anzahl der an das Terminal anschließbaren Elektrofahrzeuge. Der Ladeanschluss ist dabei ein Anschlusspunkt am Ladeterminal an den beispielsweise ein Ladekabel angeschlossen ist, um ein Elektrofahrzeug mit dem Terminal zu verbinden. Ein solches Ladekabel kann auch als Teil des Anschlusspunktes angesehen werden.

Als einen weiteren Bestandteil des Ladeterminals wird wenigstens ein Gleichstromsteller vorgeschlagen, der zwischen dem Versorgungseingang und dem Ladeausgang des Ladeterminals angeordnet ist, um aus der elektrischen Leistung der Versorgungseinrichtung jeweils einen Stromstellerstrom zu erzeugen und diesen auch zu steuern. Der Gleichstromsteller kann auch vereinfachend und synonym als Stromsteller bezeichnet werden.

Sind bspw. zwei Gleichstromsteller in einem Ladeterminal vorhanden und im Wesentlichen zueinander parallel zwischen dem Versorgungseingang und dem Ladeausgang angeschlossen, können zwei Stromstellerströme unabhängig voneinander jeweils von einem Gleichstromsteller erzeugt werden. Der Gleichstromsteller wandelt dabei über den Versorgungseingang bezogene und von der Versorgungseinrichtung bereitgestellte erste Gleichspannung bzw. den ersten Gleichstrom in einen für die Elektrofahrzeuge angepassten zweiten Gleichstrom. Ein typischer Leistungsbereich des Gleichstromstellers, der auch als DC-DC-Wandler bezeichnet werden kann, ist 50 kW, wobei der Wandler einen Stromstellerstrom von bspw. 125 A bei 400 V Gleichspannung oder 62,5 A bei 800 V Gleichspannung erzeugen kann. Dies sind typische Werte für einen Ladestrom, mit denen Elektrofahrzeuge geladen werden können.

Es kommt somit auch in Betracht und wird vorgeschlagen, dass wenigstens ein Gleichstromsteller, insbesondere alle Gleichstromsteller, intern so veränderbar, insbesondere umschaltbar sind, dass sie jeweils ihre Spannungshöhe je nach Anforderung des zu ladenden Fahrzeugs ändern. Besonders wird vorgeschlagen, dass sie jeweils ihre Spannung verdoppeln bzw. halbieren können, bei gleichzeitigem Halbieren bzw. Verdoppeln ihres abgegebenen Stromes.

Alternativ wird vorgeschlagen, dass ein Ladeterminal wenigstens eines zwischen dem Versorgungseingang und dem Ladeausgang angeordnetes Stromstellerterminal aufweist, um einen außerhalb des Ladeterminals von einem Gleichstromsteller erzeugten Stromstellerstrom, insbesondere in der Versorgungseinrichtung erzeugten Stromstellerstrom, bereitzustellen. In dieser Variante stellt somit das Stromstellerterminal einen Stromstellerstrom bereit, ohne ihn aber selbst zu erzeugen.

Der Stromstellerstrom kann hierfür von einem externen Gleichstromsteller erzeugt werden, der außerhalb des Ladeterminals angeordnet ist, und der besonders bevorzugt in der Versorgungseinrichtung angeordnet ist. Von einem solchen externen Gleichstromsteller kann der Stromstellerstrom über entsprechende Leitungen dem Stromstellerterminal zugeführt werden. Diese Leitungen brauchen nur auf diesen Stromstellerstrom des einen Gleichstromstellers dimensioniert zu werden. Das Stromstellerterminal stellt den Stromstellerstrom dann genauso bereit, wie in der anderen Variante der Gleichstromsteller, der auch als interner Gleichstromsteller bezeichnet werden kann.

Die weitere Verwendung des Stromstellerstroms ist grundsätzlich für beide Varianten gleich.

Jeder Ladestrom, der an einem Ladeanschluss zum Laden eines Elektrofahrzeugs verwendet wird, wird dabei aus einem Stromstellerstrom oder mehreren Stromstellerströmen gebildet. Umfasst ein Ladeterminal bspw. zwei Gleichstromsteller bzw. zwei Stromstellerterminals und zwei Ladeanschlüsse, ist das Ladeterminal dazu eingerichtet, einen überlagerten Ladestrom aus zwei Stromstellerströmen an einem der beiden Ladeanschlüsse zu erzeugen, wenn dies gefordert ist. Ist in einem konkreten Beispiel nur ein Elektrofahrzeug an ein Ladeterminal mit zwei Ladeanschlüssen angeschlossen, können somit beide Gleichstromsteller bzw. beide Stromstellerterminals zum Laden des Fahrzeugs verwendet werden. Sind in einem weiteren Beispiel zwei Fahrzeuge gleichzeitig an das Ladeterminal angeschlossen, können die Fahrzeuge auch getrennt mit jeweils nur einem Stromstellerstrom als Ladestrom aufgeladen werden. Somit kann das Ladeterminal in einer vorteilhaften Weise die intern verbauten Gleichstromsteller bzw. Stromstellerterminals ideal zum Laden eines Elektrofahrzeugs zusammen ausnutzen und diese zu- und wegschalten. Das ist besonders dann interessant, wenn nur ein Elektrofahrzeug zum Laden angeschlossen ist, das einen hohen Ladestrom bzw. eine hohe Ladeleistung benötigt. Hier kann die hohe Ladeleistung dann bspw. mit den exemplarisch genannten zwei Gleichstromstellern bzw. zwei Stromstellerterminals bereitgestellt werden.

Neben der Möglichkeit die Stromstellerströme mehrerer Gleichstromsteller bzw. mehrerer Stromstellerterminals jeweils nur eines Ladeterminals zum Laden eines Elektrofahrzeugs zu nutzen, ist es erfindungsgemäß vorgesehen, dass die Ladeterminals untereinander an Austauschanschlüssen über elektrische Austauschleitungen verbunden sind, um darüber Stromstellerströme untereinander auszutauschen, so dass sich ein Ladestrom eines Ladeterminals aus mehreren Stromstellerströmen mehrerer Ladeterminals zusammensetzen kann.

Nachfolgend beschriebene Erläuterungen zu Anordnung und/oder Verschaltung von Gleichstromstellern eines Ladeterminals oder eines Zusatzstromterminals sind sinngemäß auch auf Stromstellerterminals anzuwenden, sofern nichts anderes erläutert ist oder offensichtlich ist. Beschriebene Funktionsweisen von Gleichstromstellern eines Ladeterminals oder eines Zusatzstromterminals betreffen auch Gleichstromsteller, die an anderen Stellen angeordnet sind, insbesondere auch solche, die in der Versorgungseinrichtung angeordnet sind.

Es wurde erkannt, dass unterschiedliche Fahrzeugtypen sehr unterschiedliche Anforderungen an die Ladeströme und Ladespannungen aufweisen. Bspw. sinkt der Ladestrom bei einer Schnellladung bei manchen Autotypen sehr schnell mit der Zeit ab. Eine einzelne Ladesäule, welche bspw. für eine derartige Schnellladung konzipiert ist, ist somit im Mittel nur sehr schwach ausgelastet. In einem einfachen Beispiel weist ein Elektrofahrzeug einen Ladestrombedarf von zwei Stromstellerströmen auf. Nach kurzer Zeit sinkt dieser Strombedarf dann aber so ab, dass nur noch ein Stromstellerstrom zum Laden benötigt wird, da das Fahrzeug zum Beispiel bereits zu 80% aufgeladen ist. Die Ladesäule, die einen solchen zweiten Stromstellerstrom geliefert hat und dann nicht mehr zu liefern braucht, kann diesen dann anderweitig vorsehen. Sie kann ihren dann ungenutzten Stromstellerstrom an ein anderes Ladeterminal über die Austauschleitungen zur Verfügung stellen, oder einen Ladestrom an ihrem eigenen Ladeausgang bereitstellen.

Zur besseren Ausnutzung der Ladeterminals wird somit eine Lösung vorgeschlagen, die es ermöglicht, die Stromstellerströme dynamisch über Austauschleitungen auf der Ladeseite der Terminals untereinander auszutauschen, je nachdem welcher Leistungs- bzw. Strombedarf von den Fahrzeugen benötigt wird. Somit kann auch ein Elektrofahrzeug einen Stromstellerstrom aus einem benachbarten Ladeterminal beziehen, obwohl an dieses benachbarte Terminal bspw. kein Fahrzeug angeschlossen ist. Die erfindungsgemäße Ladestation ermöglicht es somit, dass der zum Laden der Elektrofahrzeuge verwendete Ladestrom auch aus benachbarten Ladeterminals direkt bezogen werden kann bzw. auch, dass wenn kein hoher Ladestrom zum Laden eines Elektrofahrzeugs benötigt wird, Stromstellerströme einem anderen Ladeterminal bereitgestellt werden können. Es kann nicht nur erreicht werden, die verfügbare Leistung variabel aufzuteilen, sondern es kann auch mit kleineren oder mittleren Gleichstromstellern variabel eine Ladung eines Elektrofahrzeugs vorgenommen werden, das einen Ladestrom benötigt, der deutlich höher ist, als jeder einzelne Gleichstromsteller liefern könnte. Es können also auch Kosten bei den Gleichstromstellern gespart werden.

Eine Besonderheit dieser Variabilität ist, dass diese örtlich bei den Ladeterminals erreicht wird. Dabei ist zu beachten, dass durch das Zusammenlegen mehrerer Stromstellerströme zu einem großen Ladestrom auch entsprechend ausgelegte Leitungen benötigt werden, die solch hohe Ströme leiten können. Bei Stromstärken von mehreren 100A sind die Anforderungen an solche Leitungen hoch. Es werden aber solch hohe Ströme nur bei bestimmten Fahrzeugen und dann auch nur für einen kurzen Zeitraum benötigt. Es müssen aber alle Leitungen, die grundsätzlich in Betracht kommen, solche hohen Ströme zu übertragen, auch für so hohe Ströme ausgelegt sein. Die meisten Leitungen sind dann für die meiste Zeit stark überausgelegt. Die erfindungsgemäße Lösung erreicht, dass dies nur im Bereich der Ladeterminals nötig ist. Die Leitungen können dazu bspw. als Stromschienen zwischen den Ladestationen ausgebildet sein. Besonders entfallen hierdurch überausgelegte Leitungen zwischen der Versorgungseinrichtung und den Ladeterminals.

Das wird dadurch erreicht, dass flexible Verschaltungen besonders im Bereich der Ladeterminals durchgeführt werden. Die Vermeidung überdimensionierter bzw. überausgelegter Leitungen besonders zwischen der Versorgungseinrichtung und den Ladeterminals wird unabhängig davon erreicht, ob die Ladeterminals selbst Gleichstromsteller aufweisen, um die Stromstellerströme zu erzeugen, oder ob sie die Stromstellerströme bereits als solche von externen Stromstellerströmen erhalten. In jedem Fall wird die flexible Verschaltung, um bedarfsabhängig Stromstellerströme zusammenzufassen, also zu addieren, im Bereich der Ladeterminals durchgeführt. Für jedes Stromstellerterminal ist zwar eine eigene externe Leitung notwendig, um den Stromstellerstrom zuzuführen, aber die braucht nur auf diesen Stromstellerstrom dimensioniert zu werden. Eine Überdimensionierung kann vermieden werden.

Es ist gemäß einer Ausführungsform auch vorgesehen, dass eine Ladestation unterschiedliche Ladeterminals aufweist, nämlich eines oder mehrere Ladeterminals, die Gleichstromsteller aufweisen, und eines oder mehrere Ladeterminals, die Stromstellerterminals aufweisen. Das kann besonders bevorzugt für eine Nachrüstung einer Ladestation vorteilhaft sein, wenn eine Ladestation mehrere Ladeterminals mit Gleichstromstellern aufweist, die ihre Leistung über eine große Versorgungsleitung von der Versorgungseinrichtung erhalten. Diese Ladestation kann dann auf einfache Art und Weise durch eines oder mehrere Ladeterminals vergrößert werden, die jeweils nur Stromterminals aufweisen, indem entsprechende Gleichstromsteller in der Versorgungseinrichtung angeordnet werden und nur entsprechend kleine Leitungen von dort zu den neuen Ladeterminals verlegt werden. Eine Einbindung der neuen Ladeterminals in die flexible Architektur der bereits bestehenden Ladeterminals kann dennoch erfolgen. Es können dann Stromstellerströme von internen Gleichstromstellern mit Stromstellerströmen von externen Gleichstromstellern zusammengeführt bzw. addiert werden, je nach Bedarf.

Vorzugsweise wird vorgeschlagen, dass die Ladestation wenigstens ein Zusatzstromterminal aufweist, zum Bereitstellen, insbesondere Erzeugen eines oder mehrerer zusätzlicher Stromstellerströme, um diese wenigstens einem Ladeterminal bereitzustellen. Dabei weist das Zusatzstromterminal selbst keinen Ladeausgang auf. Dazu umfasst jedes Zusatzstromterminal einen dem Versorgungseingang eines Ladeterminals entsprechenden Versorgungseingang zum Beziehen elektrischer Leistung von der Versorgungseinrichtung, wenigstens einen dem Austauschanschluss eines Ladeterminals entsprechenden Austauschanschluss zum Übertragen von Stromstellerströmen an wenigstens eines der Ladeterminals, und wenigstens einen zwischen dem Versorgungseingang und dem wenigstens einen Austauschanschluss angeordneten und dem Gleichstromsteller des Ladeterminals entsprechenden Gleichstromsteller. Diese Anschlüsse sind vorgesehen, um aus elektrischer Leistung der Versorgungseinrichtung jeweils einen Stromstellerstrom zu erzeugen, wobei insbesondere der Gleichstromsteller des Zusatzstromterminals mit allen Austauschanschlüssen des Zusatzstromterminals verbunden ist, um den Stromstellerstrom an allen Austauschleitungen bereitstellen zu können.

Auch hier kann alternativ wenigstens ein zwischen dem Versorgungseingang und dem wenigstens einen Austauschanschluss angeordnetes und dem Stromstellerterminal des Ladeterminals entsprechendes Stromstellerterminal vorgesehen sein, um einen außerhalb des Zusatzstromterminals von einem Gleichstromsteller erzeugten Stromstellerstrom, insbesondere in der Versorgungseinrichtung erzeugten Stromstellerstrom, bereitzustellen. Wie zum Ladeterminal erläutert, kann somit auch hier ein Stromstellerstrom jeweils intern durch einen internen Gleichstromsteller erzeugt werden, oder durch einen externen Gleichstromsteller erzeugt und durch das Stromstellerterminal bereitgestellt werden. In jedem Fall kann das Zusatzstromterminal wenigstens einen zusätzlichen Stromstellerstrom bereitstellen, der flexibel zum Erhöhen eines Ladestromes eines der Ladeterminals verwendet werden kann. Auch hier werden lange überdimensionierte Leitungen, besonders zwischen der Versorgungseinrichtung und dem Zusatzstromterminal vermieden.

Im Vergleich zum Ladeterminal wird das Zusatzstromterminal demnach nur dazu verwendet, zusätzliche Stromstellerströme an die Ladeterminals bereitzustellen. Reicht bspw. die Leistung eines Ladeterminals nicht aus, um einen Strombedarf decken zu können, den ein Elektrofahrzeug anfordert, kann das Zusatzstromterminal einen oder mehrere zusätzliche Stromstellerströme bereitstellen. Das Zusatzstromterminal wird dabei an den Austauschanschlüssen über die Austauschleitungen mit benachbarten Ladeterminals elektrisch verbunden. Das Zusatzstromterminal liefert demnach einen zusätzlichen Strom bzw. Stromstellerströme, wenn dies angefordert wird. Dazu ist das Zusatzstromterminal entsprechend den Ladeterminals dimensioniert, sodass baugleiche Gleichstromsteller bzw. Stromstellerterminals im Zusatzstromterminal verwendet werden können.

In einer weiteren Ausführungsform weist die Ladestation wenigstens ein Versorgungsterminal auf, zum Empfangen elektrischer Leistung von der Versorgungseinrichtung und zum Weiterleiten an die Ladeterminals. Dabei umfasst jedes Versorgungsterminal - einen über eine Hauptversorgungsleitung mit der Versorgungseinrichtung verbundenen Hauptversorgungseingang, um darüber Leistung von der Versorgungseinrichtung zu beziehen. Zudem weist das Versorgungsterminal wenigstens einen Versorgungsausgang auf, um darüber von der Versorgungseinrichtung bezogene Leistung an die Ladeterminals und ggf. das wenigstens eine Zusatzstromterminal weiterzuleiten, insbesondere um Leistung an alle Ladeterminals weiterzuleiten. Dazu sind den Austauschanschlüssen der Ladeterminals und ggf. des wenigstens einen Zusatzstromterminals entsprechende Austauschanschlüsse an einem ersten und zweiten Verbindungsbereich des Versorgungsterminals vorhanden, um das Versorgungsterminal an wenigstens einem Verbindungsbereich mit jeweils einem benachbarten Ladeterminal und/oder ggf. Zusatzstromterminal zu verbinden, um wenigstens einen Stromstellerstrom durch das Versorgungsterminal hindurchleiten zu können. Die zwei Verbindungsbereiche können dabei beliebig am Terminal angeordnet sein, zum Beispiel auf einer rechten und einer linken Seite des Terminals oder auch ausschließlich auf der Rückseite eines Terminals.

Demnach ist das wenigstens eine Versorgungsterminal eine Art Anschluss- und Leistungsverteilungsterminal zum Verbinden der Versorgungseinrichtung mit den Ladeterminals bzw. den Zusatzstromterminals. An das Versorgungsterminal können dann die Ladeterminals oder das Zusatzstromterminal angeschlossen werden.

Im Vergleich zum Ladeterminal und Zusatzstromterminal weist das Versorgungsterminal dabei einen gesonderten Hauptversorgungseingang auf, um darüber Leistung von der Versorgungseinrichtung über eine Hauptversorgungsleitung zu beziehen. Diese Hauptversorgungsleitung ist dabei vorzugsweise als Hochleistungskabel ausgebildet, da die gesamte Leistung über die Hauptleitung bezogen wird, die von an die Elektrofahrzeuge bereitgestellt wird. Somit ist nur das Versorgungsterminal direkt mit der Versorgungseinrichtung verbunden. Das Zusatzstromterminal und die Ladeterminals hingegen sind indirekt über das Versorgungsterminal mit der Versorgungseinrichtung verbunden. Das Versorgungsterminal leitet somit die von der Versorgungseinrichtung bezogene Leistung an die an das Versorgungsterminal angeschlossenen Terminals weiter, bzw. verteilt sie.

Das Versorgungsterminal weist dabei keinen Gleichstromsteller und auch kein Stromstellerterminal auf.

Zusammengefasst werden somit drei unterschiedliche Terminals in einer bevorzugten Ausführungsform der Ladestation vorgeschlagen, nämlich das Ladeterminal zum Laden der Elektrofahrzeuge, das Zusatzstromterminal zum Bereitstellen von zusätzlichen Stromstellerströmen sowie das Versorgungsterminal zum Bereitstellen elektrischer Leistung der Versorgungseinrichtung an die Ladeterminals und ggf. Zusatzstromterminals.

Vorzugsweise weisen die Ladeterminals und das wenigstens eine Zusatzstromterminal baugleiche Versorgungseingänge auf. So können jeweils zwei der Versorgungseingänge miteinander verbunden werden, um dadurch jeweils elektrischen Versorgungsstrom bzw. einen Teil davon von einem Versorgungseingang zu einem benachbarten Versorgungseingang weiterzuleiten. Dabei kann jedes Ladeterminal und ggf. jedes Zusatzstromterminal einen Versorgungsstrom von einem benachbarten Ladeterminal, einem Zusatzstromterminal oder Versorgungsterminal erhalten. Dabei kann eine Versorgungsleitung auch durch ein Versorgungsterminal durchgeschleift werden.

Zusätzlich oder alternativ weisen die Versorgungseingänge jeweils baugleiche Anschlussmittel, insbesondere Steckverbindung auf. Die Versorgungseingänge beschreiben somit einen Abschnitt des jeweiligen Terminals, der auch als Bereich, insbesondere synonym als Eingangsbereich bezeichnet werden kann. Dies ist vorteilhaft, um von den Ladeterminals bzw. den Zusatzstromterminals und dem Versorgungsterminal jeweils wahlweise zwei Terminals austauschbar miteinander zu verbinden. Insbesondere bilden die alle miteinander verbindbaren Ladeterminals, die Zusatzstromterminals und das Versorgungsterminal einen modularen Aufbau aus. Dazu weist auch das Versorgungsterminal dazu angepasste Austauschanschlüsse und zusätzlich oder alternativ Versorgungseingänge auf.

Vorteilhaft an den baugleichen Versorgungseingängen ist demnach, dass die Ladeterminals und die Zusatzstromterminals ähnlich zu einer langen Busleistung hintereinander geschaltet werden können, sodass die Ladestation beliebig erweiterbar ist. Die Ladestation kann somit komplett modular aus den Zusatzstromterminals, den Ladeterminals und dem Versorgungsterminal aufgebaut werden. Zudem ist besonders vorteilhaft an aufeinander angepasste Versorgungseingänge und Austauschanschlüsse, dass ein Terminal schnell ausgetauscht werden kann, falls dieses einen Defekt aufweist oder die Ladestation bei Bedarf erweitert werden soll.

Vorzugsweise weist jedes Ladeterminal wenigstens ein steuerbares Schaltmittel auf. Die möglichen, steuerbaren Schaltmittel haben dabei unterschiedliche Funktionen und werden in ein Austauschschaltmittel, ein Ladeschaltmittel und ein Brückenschaltmittel unterschieden.

Ein Austauschschaltmittel ist ein Schaltmittel, das mit jeweils einem Austauschanschluss elektrisch verbunden ist, um den Austausch wenigstens eines Stromstellerstroms über das Austauschschaltmittel mit einem benachbarten Ladeterminal oder benachbarten Zusatzstromterminal zu steuern.

Ein Ladeschaltmittel ist ein Schaltmittel, das mit jeweils einem Ladeanschluss elektrisch verbunden ist, um das Abgeben eines Ladestroms an den Ladeanschluss zu schalten.

Ein Brückenschaltmittel ist ein Schaltmittel, das mit zwei Gleichstromstellern oder zwei Stromstellerterminals in einem Ladeterminal elektrisch verbunden ist, insbesondere über zwei Querleitungen, um eine Überlagerung der Stromstellerströme der beiden Gleichstromsteller bzw. Stromstellerterminals zu steuern. Dadurch können auch weitere Stromstellerströme die anderweitig eine der beiden Querleitungen erreichen, bspw. von einem benachbarten Ladeterminal, aufgeschaltet werden.

Dabei sind die steuerbaren Schaltmittel im Wesentlichen oder ausschließlich ladeseitig zu den Ladeanschlüssen hin im Ladeterminal angeordnet, insbesondere um die Stromstellerströme dynamisch verteilen zu können und einen bedarfsgerechten Ladestrom an einem beliebigen Ladeanschluss erzeugen zu können.

In einer weiteren Ausführungsform wird vorgeschlagen, dass jedes Ladeterminal einen ersten und einen zweiten Verbindungsbereich mit jeweils mehreren, insbesondere gleich vielen, Austauschanschlüssen aufweist. Dazu ist für jeden Austauschanschluss einer der Verbindungsbereiche eine Längsleitung vorgesehen, um den jeweiligen Austauschanschluss des einen Verbindungsbereiches mit jeweils einem Austauschanschluss des anderen Verbindungsbereiches elektrisch zu verbinden. So werden bei m Austauschanschlüssen des einen Verbindungsbereiches m Längsleitungen vorgesehen, die insbesondere elektrisch zueinander parallel verlaufen.

Der erste oder zweite Verbindungsbereich kann dabei ähnlich zu dem Verbindungsbereich der Versorgungseingänge beliebig am Terminal angeordnet sein, also beispielsweise auf einer rechten und/oder linken Seite oder ausschließlich auf der Rückseite des Terminals.

Zudem wird jedem Gleichstromsteller bzw. jedem Stromstellerterminal ein Ladeanschluss zugeordnet und für jeden Gleichstromsteller bzw. jedes Stromstellerterminal wird eine Querleitung vorgesehen, um den Gleichstromsteller mit dem Ladeanschluss zu verbinden. So werden bei n Gleichstromstellern bzw. bei n Stromstellerterminals n Querleitungen vorgesehen.

Außerdem vorgesehen, dass jede Längsleitung über einen Verbindungsknoten mit wenigstens einer der Querleitung direkt verbunden ist. Darüber kann ein Stromstellerstrom, oder mehrere bereits überlagerte Stromstellerströme, eines weiteren Ladeterminals und/oder eines Zusatzstromterminals in die betreffende Querleitung eingeleitet werden.

Zusätzlich oder alternativ werden genau n-1 Brückenschaltmittel vorgesehen, um jeweils zwei Querleitungen elektrisch zu verbinden. Dadurch können die Stromstellerströme der beiden Querleitungen, die jeweils auch aus mehreren Stromstellerströmen überlagert sein können, zusammengeführt werden.

In eine besonderen Ausführungsform wir zusätzlich oder alternativ vorgeschlagen, dass jede Querleitung zu dem Ladeschaltmittel kein weiteres Schaltmittel aufweist. Jede Querleitung reicht somit von ihrem Gleichstromsteller bzw. von ihrem Stromstellerterminal zu ihrem Ladeanschluss, weist einen Schalter zum Ladeanschluss hin auf, aber keinen weiteren Schalter. Hier wurde besonders erkannt, dass auch ein flexibles Verschalten mehrerer Gleichstromsteller bzw. Stromstellerterminal oder ihrer Querleitungen ohne zusätzliche Schaltmittel in den Querleitungen auskommt.

Außerdem wird zusätzlich oder alternativ vorgeschlagen, dass in jedem Ladeterminal eine Längsleitung mehr als Querleitungen vorgesehen sind, sodass gilt: m=n+1. Hierbei wurde erkannt, dass dadurch viele Ladeterminals und ggf. Zusatzstromterminals sehr variabel, aber mit vertretbarem Aufwand verschaltet werden können, insbesondere so, dass viele Stromstellerströme zwischen den Ladeterminals ausgetauscht und ggf. durch Stromstellerströme der Zusatzstromterminal ergänzt werden können. Durch so viele Längsleitungen wie Querleitungen kann jede Querleitung eines Ladeterminals mit einer anderen Längsleitung verbunden werden, als die übrigen Querleitungen. Durch die weitere Längsleitung besteht dann auch noch die Möglichkeit, einen oder mehrere Stromstellerströme durch das jeweilige Ladeterminal durchzuleiten.

Ferner wird gemäß einer weiteren besonderen Ausführungsform vorgeschlagen, dass eine Längsleitung in dem Ladeterminal mit zwei Querleitungen jeweils über einen Verbindungsknoten direkt verbunden ist, mit einem der Brückenschaltmittel zwischen den beiden Verbindungsknoten, oder mit nur einer Querleitung über einen Verbindungsknoten verbunden ist, ohne in dem Ladeterminal ein Brückenschaltmittel aufzuweisen. Damit kann die vorbeschriebene Flexibilität ohne großen Aufwand erreicht werden.

Zusammengefasst werden demnach Längs- und Querleitungen mit den unterschiedlichen steuerbaren Schaltmitteln derart innerhalb des Ladeterminals verschaltet, dass es diese Verschaltungsform in Art einer Matrixform ermöglicht, Stromstellerströme von benachbarten Terminals zu beziehen oder abzugeben, und auch alle Gleichstromsteller bzw. Stromstellerterminals eines Ladeterminals intern nutzen zu können. Dabei wird aber eine vollständige Matrixform vermieden, indem nur sehr gezielt und nur an bestimmten Stellen Schaltmittel eingesetzt werden. Auch die Anzahl der Längsleitungen, die auch die Ladeterminals, ggf. auch Zusatzstromterminals, übergreifend verbinden, wird sehr gering gehalten. Besonders im Vergleich zu einer vollständigen Schaltmatrix, die für jede Querleitung der Ladestation, also nicht nur für jede eines Ladeterminals, eine Längsleitung aufweisen würde. Bei fünf Ladeterminals mit je zwei Gleichstromstellern, bzw. zwei Stromstellerterminals, also je zwei Querleitungen, wären das 10 Längsleitungen, wohingegen gemäß einer vorgeschlagenen Ausführungsform für ein solches Beispiel nur 3 Längsleitung notwendig wären.

Es wird besonders ermöglicht, die zuvor beschriebene Verschaltungsform der Schaltmittel mit den Längs- und Querleitungen, dass die Anzahl der bereitgestellten Stromstellerströme nicht nur von dem Terminal an den ein Auto angeschlossen gesteuert werden kann, sondern auch benachbarte Terminals zum Aufladen eines Elektrofahrzeugs genutzt werden können.

In einer weiteren Ausführungsform wird vorgeschlagen, dass in der Ladestation wenigstens eine Steuereinheit vorgesehen ist, die dazu vorbereitet ist, die Ladeterminals und/oder die Zusatzstromterminals derart zu steuern, dass ein Ladestrom eines Ladeterminals aus einem Stromstellerstrom oder mehreren Stromstellerströmen gebildet werden kann. Dabei kann der Ladestrom entweder aus Stromstellerströmen von einem oder mehreren Gleichstromstellern bzw. Stromstellerterminals desselben Ladeterminals und zusätzlich oder alternativ aus Stromstellerströmen von einem oder mehreren Gleichstromstellern bzw. Stromstellerterminals eines oder mehrerer anderer Ladeterminals, oder aus Gleichstromstellern eines oder mehrerer anderer Terminals und Stromstellerterminals eines oder mehrerer anderer Ladeterminals gebildet werden. Eine solche Steuereinheit steuert besonders die Schaltmittel an und ggf. die Gleichstromsteller, interne und/oder externe. Es kommt auch eine Koordination mit der Versorgungseinrichtung in Betracht, um bspw. einen Zugriff auf einen Speicher zu steuern oder einen Speicherinhalt zumindest zu berücksichtigen, oder dort angeordnete externe Gleichstromsteller anzusteuern.

In einer besonderen Ausführungsform wird vorgeschlagen, dass wenigstens eine Steuereinheit eine dezentrale Steuereinheit ist, wobei jeweils eine dezentrale Steuereinheit in einem Ladeterminal und/oder in einem Zusatzstromterminal angeordnet ist. Dabei wird vorgeschlagen, dass die Steuereinheit mit wenigstens einer weiteren Steuereinheit kommuniziert, um das Erzeugen der Ladeströme koordiniert zu steuern. Die Verwendung dezentraler Steuereinheiten hat den Vorteil, dass diese auch auf einfache Art und Weise mit Eingabeeinheiten an jeder Ladestation gekoppelt werden können.

Außerdem wird in einer weiteren besonderen Ausführungsform vorgeschlagen, dass wenigstens eine Steuereinheit eine übergeordnete zentrale Steuereinheit ist, wobei die zentrale Steuereinheit dazu eingerichtet ist, die Ladeterminals und/oder die Zusatzstromterminals direkt zu steuern. Zusätzlich oder alternativ kann die zentrale Steuereinheit die Ladeterminals und/oder die Zusatzstromterminals indirekt über die in den Ladeterminals angeordneten dezentralen Steuereinheiten steuern, um das Erzeugen der Ladeströme zu koordinieren. Durch eine zentrale, übergeordnete Steuerung ist besonders eine übergreifende Koordination aller Ladeterminals gut realisierbar. Vorzugsweise ist vorgesehen, dass bei einem Ausfall der übergeordneten Steuerung jedes Ladeterminal wenigstens eine einfache Stellerleistung eines Gleichstromstellers bzw. Stromstellerterminals als Fall-back-Option bereitstellen kann. Vorzugsweise ist vorgesehen, dass jedes Ladeterminal dazu vorbereitet ist, bei einem Ausfall der übergeordneten Steuerung eigenständig wenigstens einen Ladestrom aus einem, mehreren oder allen Stromstellerströmen des Ladeterminals zu erzeugen.

Vorzugsweise ist die Ladestation so aufgebaut, dass diese insbesondere über eine bzw. die wenigstens eine Steuereinheit derart ansteuerbar ist, dass wenigstens ein Austauschschaltmittel eines Ladeterminals, an dem ein zu ladendes Elektrofahrzeug angeschlossen ist, geschlossen werden kann, um dadurch wenigstens einen Stromstellerstrom von wenigstens einem benachbarten Ladeterminal zu beziehen, und um damit einen Ladestrom für das zu ladende Elektrofahrzeug zu erzeugen.

In einer besonderen Ausführungsform ist die Ladestation zusätzlich oder alternativ so aufgebaut, dass wenigstens ein Brückenschaltmittel des Ladeterminals an dem das Elektrofahrzeug angeschlossen ist, geschlossen werden kann, um dadurch mehrere Stromstellerströme aus mehreren in dem Ladeterminal angeordneten Gleichstromstromstellern bzw. Stromstellerterminals zum Erzeugen des Ladestroms zusammenzufügen.

Außerdem kann in einer weiteren besonderen Ausführungsform zusätzlich oder alternativ wenigstens ein Austauschschaltmittel wenigstens eines benachbarten oder weiteren Ladeterminals und/oder benachbarten oder weiteren Zusatzstromterminals von der Steuereinheit geschlossen werden kann, um dadurch, wenigstens einen Stromstellerstrom aus benachbarten oder weiteren Ladeterminals oder Zusatzstromterminals zum Erzeugen des Ladestroms zu beziehen und zusammenzuführen.

Außerdem wird vorgeschlagen, dass wenigstens ein Brückenschaltmittel wenigstens eines benachbarten oder weiteren Ladeterminals geschlossen werden kann, um wenigstens einen Stromstellerstrom aus mehreren in dem benachbarten Ladeterminal angeordneten Gleichstromstellern oder Stromstellerterminals zum Erzeugen des Ladestroms über wenigstens eine Austauschleitung zu beziehen.

Damit sind verschiedene Möglichkeiten gegeben, die variable Verteilung oder Zuordnung von Stromstellerströmen zu erreichen. Das wird besonders durch das Schalten der Schaltmittel erreicht. Besonders bevorzugt werden all die beschriebenen Schalthandlungen in einem Gesamtkonzept koordiniert. Das koordiniert besonders das Schalten der drei Schalterarten, nämlich das Austauschschaltmittel, das Ladeschaltmittel und das Brückenschaltmittel.

Auch ist die Steuereinheit insbesondere dazu eingerichtet, die innerhalb eines Ladeterminals angeordneten steuerbaren Schaltmittel über ein Steuersignal zu steuern. Dazu kann die Steuereinheit die Schaltmittel über eine übliche Steuerverbindung wie eine direkt über eine übliche Steuerverbindung oder ein sonstiges Kommunikationssystem ansteuern.

Vorzugsweise wird vorgeschlagen, dass wenigstens ein Austauschschaltmittel und wenigstens ein Brückenschaltmittel so verschaltet sind, dass ein Stromstellerstrom eines Gleichstromstellers oder Stromstellerterminals eines ersten Ladeterminals oder eines ersten Zusatzstromterminals über eine erste Längsleitung und das wenigstens eine Austauschschaltmittel in ein zweites Ladeterminal fließen kann. Zudem kann der Stromstellerstrom in dem zweiten Ladeterminal über einen ersten Verbindungsknoten und eine erste Querleitung zu einer zweiten Längsleitung fließen. Darüber hinaus kann auch der Stromstellerstrom über einen zweiten Verbindungsknoten, das wenigstens eine Brückenschaltmittel und einen dritten Verbindungsknoten zu einer zweiten Querleitung des zweiten Ladeterminals fließen.

Diese besondere Verschaltungsvarianten ermöglichen es somit, das Austauschschaltmittel und das wenigstens eine Brückenschaltmittel so verschalten sind, dass wenigstens ein weiterer Stromstellerstrom zum Erzeugen eines Ladestroms zusammengeführt werden kann, insbesondere um ein an die zweite Querleitung angeschlossenes Elektrofahrzeug zu laden.

Vorzugsweise ist die Ladestation so aufgebaut, dass diese insbesondere über eine bzw. die wenigstens eine Steuereinheit derart angesteuert werden kann, dass die steuerbaren Schaltmittel so geschaltet werden können, dass sich ein Ladestrom aus wenigstens 3 Stromstellerströmen, vorzugsweise wenigstens 5 Stromstellerströmen, insbesondere wenigstens 7 Stromstellerströmen zusammensetzt bzw. aus diesen gebildet werden kann.

Ein besonderer Vorteil einen Ladestrom aus mehreren Stromstellerströmen zu erzeugen ist, dass keine oder weniger groß dimensionierte Gleichstromsteller verwendet zu werden brauchen, seien sie intern oder extern, um einen Strombedarf zu decken, der ggf. größer ist, als ein üblicher Gleichstromsteller erzeugen kann. Beispielsweise könnte so ein Elektrofahrzeug, das einen Ladestrom von 400 A benötigt, durch vier Stromstellerströme zu je 100 A aufgeladen werden, anstatt einen groß dimensionierten Stromsteller mit 400 A nutzen zu müssen. Zudem kann die Anzahl der verwendeten Stromstellerströme schnell wieder von vier auf drei reduziert werden, um bei diesem Beispiel zu bleiben, wenn der Bedarf des hohen Ladestroms wieder gesunken ist. Der freiwerdende Gleichstromsteller kann dann einen Stromstellerstrom für einen anderen Ladevorgang bereitstellen.

In einer weiteren Ausführungsform wird vorgeschlagen, dass die Steuereinheit das Erzeugen der Ladeströme, insbesondere die Anzahl der an einem Ladeanschluss bereitgestellten Stromstellerströme, abhängig eines Steuerkriteriums steuern kann. Dabei können die Steuerkriterien unterschiedlich sein, und es werden besonders die folgenden vorgeschlagen:
- ein Typ eines an den Ladeanschluss angeschlossen Elektrofahrzeugs;
- ein Speicherzustand des an den Ladeanschluss angeschlossen Elektrofahrzeugs;
- ein speicherzustandsabhängiger Strombedarf des angeschlossenen Elektrofahrzeugs;
- eine Stromanforderung des angeschlossenen Elektrofahrzeugs;
- ein von einem Benutzer angegebener Ladewunsch zum Laden des an den Ladeanschluss angeschlossen Elektrofahrzeugs;
- eine Anzahl verfügbarer Gleichstromsteller und/oder Stromstellerterminals zum Erzeugen bzw. Bereitstellen von Stromstellerströmen zum Zusammenfügen zum Erzeugung eines Ladestroms.

Ein wesentlicher Vorteil gegenüber konventionellen Ladestationen ist somit, dass ungenutzte Stromstellerströme bzw. Stromstellerströme temporär ungenutzter Gleichstromsteller, seien sie intern oder extern, in Abhängigkeit der genannten Steuerkriterien anderen Elektrofahrzeugen an benachbarten Ladeterminals bereitgestellt werden können. Zudem können ebenso ungenutzte Gleichstromstromsteller einfach weitergeschaltet werden, wenn Fahrzeuge länger an einem Ladeterminal stehen und bereits vollständig geladen sind.

Ferner wird erfindungsgemäß ein Verfahren zum Laden mehrerer Elektrofahrzeuge, insbesondere Elektroautomobile, mittels einer Ladestation vorgeschlagen und das Verfahren umfasst die Schritte:
- Versorgen der Ladestation mit elektrischer Leistung über eine Versorgungseinrichtung der Ladestation;
- Laden jeweils wenigstens eines Elektrofahrzeugs mittels eines von mehreren Ladeterminals der Ladestation mit den Schritten
   - Beziehen elektrischer Leistung von der Versorgungseinrichtung an einem Versorgungseingang des Ladeterminals,
   - Abgeben jeweils eines Ladestromes zum Laden des angeschlossenen Elektrofahrzeugs an einen Ladeausgang mit einem oder mehreren Ladeanschlüssen, wobei das Elektrofahrzeug an einem der Ladeanschlüsse angeschlossen ist, an den der Ladestrom abgegeben wird, und wobei
   - wenigstens einer zwischen dem Versorgungseingang und dem Ladeausgang angeordneter Gleichstromsteller aus elektrischer Leistung der Versorgungseinrichtung jeweils einen Stromstellerstrom erzeugt, oder wenigstens ein zwischen dem Versorgungseingang und dem Ladeausgang angeordnetes Stromstellerterminal jeweils einen durch jeweils einen außerhalb des Ladeterminals von einem Gleichstromsteller erzeugten Stromstellerstrom, insbesondere in der Versorgungseinrichtung erzeugten Stromstellerstrom, bereitstellt, und in jedem Fall
   - der Ladestrom aus einem Stromstellerstrom oder mehreren Stromstellerströmen gebildet wird, und wobei
   - die Ladeterminals untereinander an Austauschanschlüssen über elektrische Austauschleitungen verbunden sind, und wahlweise
   - darüber Stromstellerströme untereinander austauschen.

Es wird somit ein Verfahren vorgeschlagen, dass in vorteilhafter Weise eine Ladestation gemäß wenigstens einer vorstehenden beschriebenen Ausführungsform zum Laden wenigstens eines Elektrofahrzeugs verwendet. Das Verfahren kann die zu der Ladestation genannten Vorteil und Eigenschaften somit umsetzten und oder ausnutzen.

Vorzugsweise wir somit auch vorgeschlagen, dass das Verfahren eine Ladestation gemäß einer vorstehend genannten Ausführungsform verwendet.

Eine weitere Ausführungsform schlägt vor, dass
- wenigstens ein Austauschschaltmittel eines Ladeterminals, an dem ein zu ladendes Elektrofahrzeug angeschlossen ist, geschlossen wird, und dadurch wenigstens ein Stromstellerstrom von wenigstens einem benachbarten Ladeterminal bezogen wird, und damit einen Ladestrom für das zu ladende Elektrofahrzeug erzeugt wird und/oder
- wenigstens ein Brückenschaltmittel des Ladeterminals an dem das Elektrofahrzeug angeschlossen ist, geschlossen ist, und dadurch mehrere Stromstellerströme aus mehreren in dem Ladeterminal angeordneten Gleichstromstromstellern oder Stromstellerterminals zum Erzeugen des Ladestroms zusammengefügt bzw. überlagert werden, und/oder
- wenigstens ein Austauschschaltmittel wenigstens eines benachbarten oder weiteren Ladeterminals und/oder benachbarten oder weiteren Zusatzstromterminals geschlossen ist, und dadurch, wenigstens ein Stromstellerstrom aus benachbarten oder weiteren Ladeterminals oder Zusatzstromterminals zum Erzeugen des Ladestroms bezogen und zusammengeführt bzw. überlagert wird und/oder
- wenigstens ein Brückenschaltmittel wenigstens eines benachbarten oder weiteren Ladeterminals geschlossen ist, und dadurch wenigstens ein Stromstellerstrom aus mehreren in dem benachbarten Ladeterminal angeordneten Gleichstromstellern bzw. Stromstellerterminals zum Erzeugen des Ladestroms über wenigstens eine Austauschleitung bezogen wird.

Auch mit diesen Verfahrensschritten können die vorstehend zur Ladestation erläuterten Vorzüge und Eigenschaften erreicht oder ausgenutzt werden. Besonders vorteilhaft werden die vier vorstehend beschriebenen Merkmale zusammen kombiniert verwendet, um dadurch in vorteilhafter Weise Ladeströme aus mehreren Stromstellerströmen zusammenzusetzen.

Die vorliegende Erfindung wird nun nachfolgend exemplarisch anhand von Ausführungsbeispielen unter Bezugnahme auf die begleitenden Figuren näher erläutert.
- Figur 1: zeigt eine Ausführungsform einer Ladestation.
- Figur 2: zeigt eine detailliertere Ausführungsform eines Ladeterminals, eines Zusatzstromterminals sowie eines Versorgungsterminals.
- Figur 3: zeigt ein Diagramm mit drei unterschiedlichen Ladestromverläufen für jeweils drei verschiedene Fahrzeugklassen.
- Figur 4: zeigt eine zu Figur 1 alternative Ausführungsform einer Ladestation.

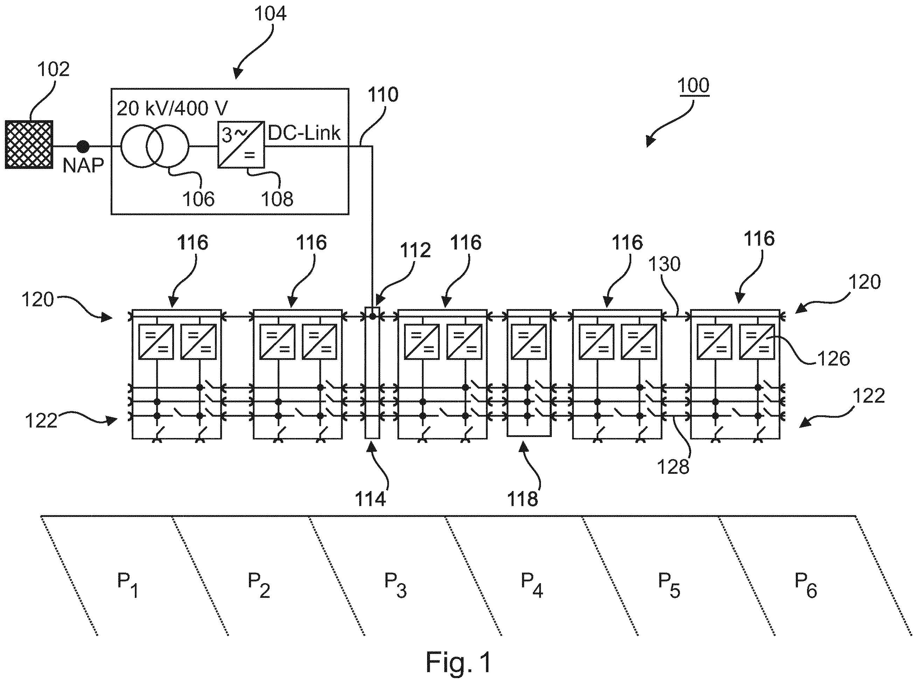

Die Figur 1 zeigt eine Ladestation 100, die über einen Netzanschlusspunkt NAP mit einem elektrischen Versorgungsnetz 102 verbunden ist. Um eine Leistung zum Laden der Elektrofahrzeuge aus dem Versorgungsnetz 102 beziehen zu können, ist eine Versorgungseinrichtung 104 vorgesehen. Die Versorgungseinrichtung 104 umfasst dabei wenigstens einen Transformator 106 und eine dem Transformator nachgeschaltete Gleichrichtereinheit 108. Der Transformator 106 ist dabei direkt über den Netzanschlusspunkt NAP mit dem Versorgungsnetz 102 verbunden und transformiert dabei eine erste Wechselspannung, insbesondere die Netzspannung, in eine für die Gleichrichtereinheit 108 geeignete zweite Wechselspannung. Als konkretes Beispiel ist in der Figur 1 hierzu ein Mittelspannungstransformator dargestellt, der die Netzspannung von 20 kV in eine 400-V-Wechselspannung herunter transformiert. Die gezeigte Gleichrichtereinheit 108 erzeugt dabei aus der zweiten Wechselspannung eine Gleichspannung an einem Gleichspannungsausgang und kann somit eine Leistung bereitstellen, die aus dem Versorgungsnetz bezogen wird. Somit ist die Versorgungseinrichtung 104 insbesondere zum Anschließen an ein elektrisches Versorgungsnetz 102 sowie zum Versorgen der Ladestation mit elektrischer Leistung vorgesehen.

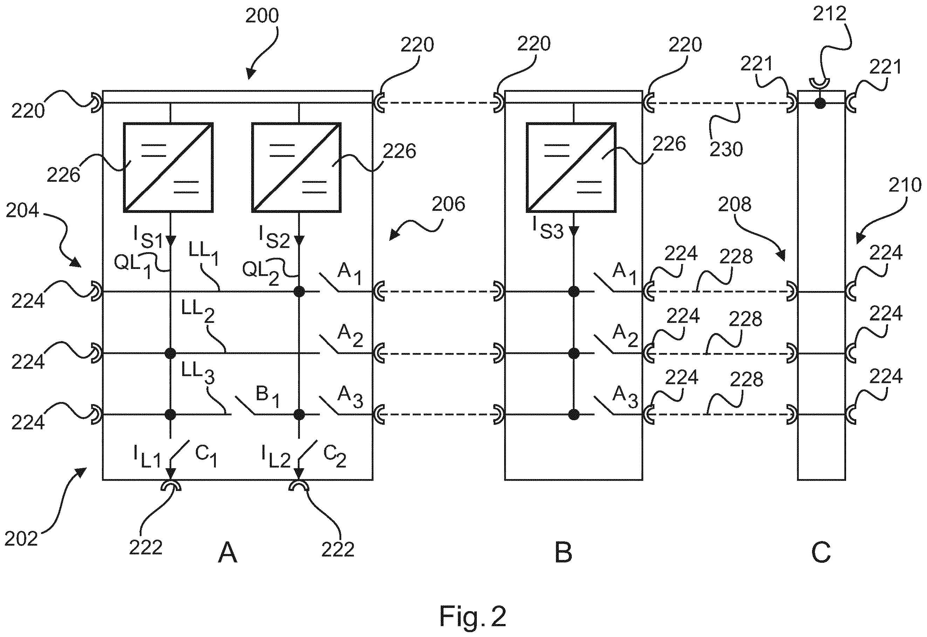

Die in der Figur 1 gezeigte Ladestation 100 umfasst weiterhin fünf Ladeterminals 116, ein Versorgungsterminal 114 sowie ein Zusatzstromterminal 118, die auch vereinfachend als Terminals bezeichnet werden können. Eine detaillierte Beschreibung der genannten Terminals folgt in der Beschreibung zur Figur 2.

In einem konkreten Beispiel sind die Terminals (114, 116, 118) der Ladestation 100 nebeneinander an den Parkplätzen P1 bis P6 angeordnet. So können mehrere Elektrofahrzeuge geladen werden, die auf den Parkplätzen P1 - P6 zum Laden abgestellt werden. Die Parkplätze sind besonders veranschaulichend zu verstehen und soll nicht die Anzahl der zu ladenden Fahrzeuge auf sechs beschränken, vielmehr können grundsätzlich auch 10 Fahrzeuge an der gezeigten Ladestation geladen werden.

Dabei ist ein Versorgungsterminal 114 vorgesehen, um die von der Versorgungseinrichtung 104 bereitgestellte Leistung in Form einer Gleichspannung an die Terminals weiterzugeben. Dazu ist das Versorgungsterminal über eine Hauptversorgungsleitung 110 mit der Gleichrichtereinheit 108 elektrisch verbunden. Um die elektrische Verbindung mit der Hauptversorgungsleitung 110 herzustellen, ist ein Hauptversorgungseingang 112 an dem Versorgungsterminal 114 angebracht. Über den Hauptversorgungseingang 112 kann somit eine Leistung von der Versorgungseinrichtung 104 bezogen werden. Die so bezogene Leistung wird dann über mehrere Versorgungsleitungen 130 an die anderen Terminals (116, 118) verteilt. Das Versorgungsterminal 114 ist also zum Empfangen elektrischer Leistung von der Versorgungseinrichtung und zum Weiterleiten an die Ladeterminals 116 und ggf. Zusatzstromterminals 118.

Neben dem Versorgungsterminal weist die Ladestation 100 mehrere Ladeterminals 116 zum Laden jeweils wenigstens eines Elektrofahrzeugs auf.

Jedes Ladeterminal umfasst dabei einen Versorgungseingang 120 und einen Ladeausgang 122. Der Versorgungseingang 120 ist dabei zum Beziehen elektrischer Leistung von der Versorgungseinrichtung 104 eingerichtet, indem Anschlüsse am Versorgungseingang 120 vorgesehen sind, mit denen die Terminals untereinander an den Versorgungseingängen verbunden werden können. Die Figur 1 zeigt hierbei, dass beispielsweise zwei Ladeterminals 116 linksseitig und drei Ladeterminals sowie das Zusatzstromterminal 118 rechtsseitig, bezogen auf das Versorgungsterminal 114, angeordnet sind. Alle Terminals sind dabei an den jeweiligen Versorgungseingängen 120 über Versorgungsleitungen 130 miteinander elektrisch gekoppelt. In dem gezeigten Beispiel ist somit zwischen zwei benachbarten Terminals jeweils ein Abschnitt der Versorgungsleitung 130 vorhanden, sodass keine einzelne, durchgängige lange Versorgungsleitung vorliegt, wie es bei einer Stromsammelschiene oder einer Busleitung üblich ist. Über die Versorgungsleitungen 130 können die Ladeterminals die von dem Versorgungsterminal 114 weitergeleitete elektrische Leistung direkt beziehen. Je nach Anordnung der Terminals in der Ladestation können die Ladeterminals 116 und Zusatzstromterminals 118 jedoch auch indirekt die weitergeleitete Leistung des Versorgungsterminals 114 über ein anderes Terminal beziehen. In diesem Fall können die Versorgungseingänge dann auch als Versorgungsausgänge für ein benachbartes Terminal angesehen werden.

Neben dem Versorgungseingang 120 ist zudem an jedem Ladeterminal 116 ein Ladeausgang 122 mit einem oder mehreren Ladeanschlüssen vorgesehen, die zum Abgeben jeweils eines Ladestromes zum Laden jeweils eines angeschlossenen Elektrofahrzeugs genutzt werden. In der Figur 2 können zum Beispiel zwei Elektrofahrzeuge an die zwei Ladeausgänge jeweils einer der fünf Ladeterminals 116 angeschlossen werden.

Zwischen dem Versorgungseingang 120 und dem Ladeausgang 122 ist in jedem der Ladeterminals 116 dabei wenigstens ein Gleichstromsteller 126 angeordnet, um jeweils einen Stromstellerstrom pro Stromsteller bzw. DC-DC-Wandler zu erzeugen. Die so erzeugten Ströme werden dann verwendet, um ein an einem Ladeausgang 122 eines der Ladeterminals angeschlossenes Elektrofahrzeug zu laden.

Als weiteres Terminal ist ein Zusatzstromterminal in der Ladestation vorgesehen. Dieses Zusatzstromterminal dient dazu, einen zusätzlichen Strom zum Laden der Elektrofahrzeuge zu erzeugen und bereitzustellen. Es weist dabei keine Ladeanschlüsse an einem Ladeausgang zum Laden eines Elektrofahrzeuges auf. Ein zusätzlicher Strom wird beispielsweise dann bereitgestellt, wenn ein Ladeterminal zu stark ausgelastet ist. Dabei kann eine zu starke Auslastung zum Beispiel eintreten, wenn ein Strombedarf eines Elektroautos den maximalen Strom überschreitet, den ein Terminal erzeugen kann. In einem konkreten Beispiel, wenn ein Fahrzeug einen Ladestrom von 400 A benötigt und das Ladeterminal jedoch nur maximal 100 A bereitstellen kann. Somit ist das Zusatzstromterminal zum Erzeugen eines oder mehrerer zusätzlicher Zusatzströme, insbesondere Stromstellerströme vorgesehen, um diese wenigstens einem Ladeterminal bereitzustellen, wobei das Zusatzstromterminal selbst keinen Ladeausgang aufweist.

Besonderes an der in der Figur 1 gezeigten Ladestation 100 ist zu erkennen, dass die Ladeausgänge 122 der Ladeterminals untereinander an Austauschanschlüssen über elektrische Austauschleitungen 128 verbunden sind, um darüber die erzeugten Stromstellerströme untereinander auszutauschen zu können. Ebenso ist es vorgesehen, dass auch das Versorgungsterminal 114 und das Zusatzstromterminal 118 ausgangsseitig mit den Ladeterminals 116 über die Austauschleitungen 128 elektrisch gekoppelt sind. So kann beispielsweise ein auf dem Parkplatz P1 parkendes Elektrofahrzeug einen Ladestrom beziehen, der wenigstens teilweise von einem Gleichstromsteller aus einem anderen Ladeterminal oder einem Zusatzstromterminal erzeugt wurde.

Die Figur 2 zeigt eine detailliertere Ausführungsform eines Ladeterminals A, eines Zusatzstromterminals B sowie eines Versorgungsterminals C die den Ladeterminals 116, dem Zusatzstromterminal 118 bzw. dem Versorgungsterminal 114 der Figur 1 entsprechen.

Das Ladeterminal A weist dabei einen Versorgungseingang 200 sowie einen Ladeausgang 202 auf. Am Versorgungseingang 200 sind dabei zwei Anschlussmittel 220 angeordnet, die zum Beispiel als Steckverbinder ausgebildet sein können. An diese Anschlussmittel kann somit ein beliebiges weiteres Ladeterminal, ein Zusatzstromterminal oder ein Versorgungsterminal angeschlossen werden, um die Versorgungeingänge dieser Terminals miteinander zu verbinden.

Dabei weist jedes Ladeterminal A zwei Gleichstromsteller 226 auf, die zwischen dem Versorgungseingang 200 und dem Ladeausgang 202 zueinander parallel angeordnet sind, und jeweils einen Stromstellerstrom I_{S1} bzw. I_{S2} in jeweils eine am Ladeausgang angeordnete Querleitung QL₁ und QL₂ einprägen. Dabei ist jedem Gleichstromsteller 226 genau ein Ladeanschluss 222 und für jeden Gleichstromsteller eine Querleitung QL₁ bzw. QL₂ zugeordnet. Somit werden bei n Gleichstromstellern n Querleitungen verwendet, um den Gleichstromsteller mit dem Ladeanschluss zu verbinden. Mit zwei im Ladeterminal A vorhandenen Gleichstromstellern ergibt sich somit ein Aufbau des Terminals, aus zwei Querleitungen QL₁, QL₂ und zwei Ladeanschlüssen 222.

Zusätzlich sind für das Ladeterminal A ein erster und ein zweiter Verbindungsbereich mit den Pfeilen 204 und 206 angedeutet, die jeweils mehrere, insbesondere gleich viele, Austauschanschlüsse 224 aufweist. An diesen Austauschanschlüssen können die Terminals über im Wesentlichen parallele Austauschleitungen 228 verbunden werden, die in der Figur 2 gestrichelt dargestellt sind.

Für jeden Austauschanschluss einer der Verbindungsbereiche ist darüber hinaus eine Längsleitung LL₁, LL₂, LLs innerhalb des Terminals vorgesehen, um den jeweiligen Austauschanschluss 224 des einen Verbindungsbereiches 204, 206 mit jeweils einem Austauschanschluss des anderen Verbindungsbereiches 206, 204 elektrisch zu verbinden, sodass bei m Austauschanschlüssen des einen Verbindungsbereiches m Längsleitungen vorgesehen sind. Die Längsleitungen verlaufen dabei insbesondere elektrisch zueinander parallel. Hierzu weist die konkrete Ausgestaltung des Ladeterminals A zum Beispiel im Verbindungsbereich 206 drei Austauschanschlüsse auf, womit drei Längsleitungen vorgesehen werden. Die Längsleitungen LL₁, LL₂ und LLs verbinden dabei die beiden Verbindungsbereiche 204 und 206.

Damit ein dynamischer Austausch der erzeugten Gleichstromstellerströme möglich ist, ist jede Längsleitung LL₁, LL₂, LL₃ jeweils über einen Verbindungsknoten mit wenigstens einer der Querleitung QL₁, QL₂ direkt verbunden.

Damit zudem die Ladeströme I_{L1} oder I_{L2} an einem der Ladeausgänge 222 beliebig erzeugt werden können, sind im Ladeterminal mehrere steuerbare Schaltmittel vorhanden, die von einer Steuereinheit angesteuert werden können. Dabei kann entweder jedes Ladeterminal selber eine Steuereinheit aufweisen oder eine übergeordnete Steuereinheit die Ansteuerung der steuerbaren Schaltmittel übernehmen. Ebenso ist eine Mischform aus Steuereinheiten in jedem Ladeterminal und einer übergeordneten Steuereinheit implementierbar. Dies ist jedoch nicht in der Figur 2 dargestellt.

Als steuerbare Schaltmittel sind dabei im Ladeterminal A in der Figur 2 die drei Austauschschaltmittel A1, A2 und A3 dargestellt, die mit jeweils einem Austauschanschluss 224 elektrisch verbunden sind, um den Austausch wenigstens eines Stromstellerstroms über das Austauschmittel mit einem benachbarten Ladeterminal oder Zusatzstromterminal zu steuern. Ein weiteres steuerbares Schaltmittel ist das Brückenschaltmittel B1, das zwei Gleichstromsteller in einem Ladeterminal elektrisch miteinander verbindet, vorliegend über die zwei Querleitungen QL₁ und QL₂, um eine Überlagerung der Stromstellerströme I_{S1} und I_{S2} der beiden Gleichstromsteller 226 zu steuern. Ebenso ist jeweils ein Ladeschaltmittel C1 oder C2 an einem Ladeanschluss 222 angeordnet, um entweder das Abgeben des Ladestroms I_{L1} oder I_{L2} zu steuern.

Demnach kann das in der Figur 2 dargestellte Ladeterminal A einen Ladestrom I_{L1} oder I_{L2} aus einem Stromstellerstrom I_{S1} bzw. I_{S2} oder mehreren Stromstellerströmen bilden und sogar weitere Stromstellerströme über die Austauschanschlüsse beziehen oder abgegeben.

Im Vergleich zum Ladeterminal A ist im Zusatzstromterminal B dabei der Gleichstromsteller 226 mit allen Austauschanschlüssen 224 verbunden, um den Stromstellerstrom I_{S3} an allen Austauschleitungen 228 bereitzustellen. Das Zusatzstromterminal ist somit dazu vorbereitet einen zusätzlichen Strom abgeben. Damit jedoch auch Stromstellerströme gesteuert abgegebenen werden können, sind ähnlich zum Ladeterminal A drei Austauschschaltmittel A1, A2 und A3 im Zusatzstromterminal vorgesehen. Diese können auch zum Weiterleiten von Stromstellerströmen benachbarter Terminals eingesetzt werden, wenn zum Beispiel der Stromsteller 226 im Zusatzstromterminal keinen Strom I_{S3} erzeugt.

Das Versorgungsterminal C weist im Vergleich zu den Terminals A und B einen zusätzlichen Hauptversorgungseingang 212 auf sowie jeweils zwei Versorgungsausgänge 221 die baugleich zu den Versorgungseingängen der Terminals A und B sind. Die Versorgungsausgänge 221 werden dabei genutzt, um darüber die von der Versorgungseinrichtung bezogene Leistung an die Ladeterminals und ggf. das wenigstens eine Zusatzstromterminal weiterzuleiten, insbesondere um Leistung an alle Ladeterminals weiterzuleiten.

Zudem weist das Versorgungsterminal C ähnlich zu den Terminals A und B ebenfalls Austauschanschlüsse 224 auf, um an wenigstens einem Verbindungsbereich 208 oder 210 mit jeweils einem benachbarten Ladeterminal und/oder ggf. Zusatzstromterminal verbunden zu werden, um wenigstens einen Stromstellerstrom durch das Versorgungsterminal hindurchleiten zu können.

Die Versorgungseingänge/-ausgänge und Austauschanschlüsse der Terminals A, B und C sind dabei im Wesentlichen baugleich. So kann eine Ladestation beliebig, wie eine Art Setzkasten, aus den Terminals A, B und/oder C modular aufgebaut werden.

Unter Bezugnahme auf die Figuren 1 und 2 wurde die Erfindung besonders für Ladeterminals und Zusatzstromterminals beschrieben, die jeweils einen oder mehrere Gleichstromsteller aufweisen. Diese Beschreibung und die genannten Vorteile sind ebenso auf Varianten sinngemäß übertragbar, die jeweils statt eines oder mehrerer Gleichstromsteller ein bzw. mehrere Stromstellerterminals verwenden. Bspw. können in dem Ladeterminal A bzw. 116 statt der beiden Gleichstromsteller 226 bzw. 126 zwei Stromstellerterminals vorgesehen sein, die jeweils einen Stromstellerstrom aus der Versorgungseinrichtung 104 erhalten und als Stromstellerstrom I_{S1} bzw. I_{S2} bereitstellen. Dafür kann für jedes Stromstellerterminal ein Gleichstromsteller in der Versorgungseinrichtung 104 vorgesehen sein, sowie eine Verbindungsleitung zur Versorgungseinrichtung 104 gemäß Figur 1. Es können eine, mehrere oder alle Ladeterminals 116 statt mit Gleichstromstellern 126 mit Stromstellerterminals versehen sein. Gleiches gilt sinngemäß für das Zusatzstromterminal 118 bzw. etwaige weitere Zusatzstromterminals.

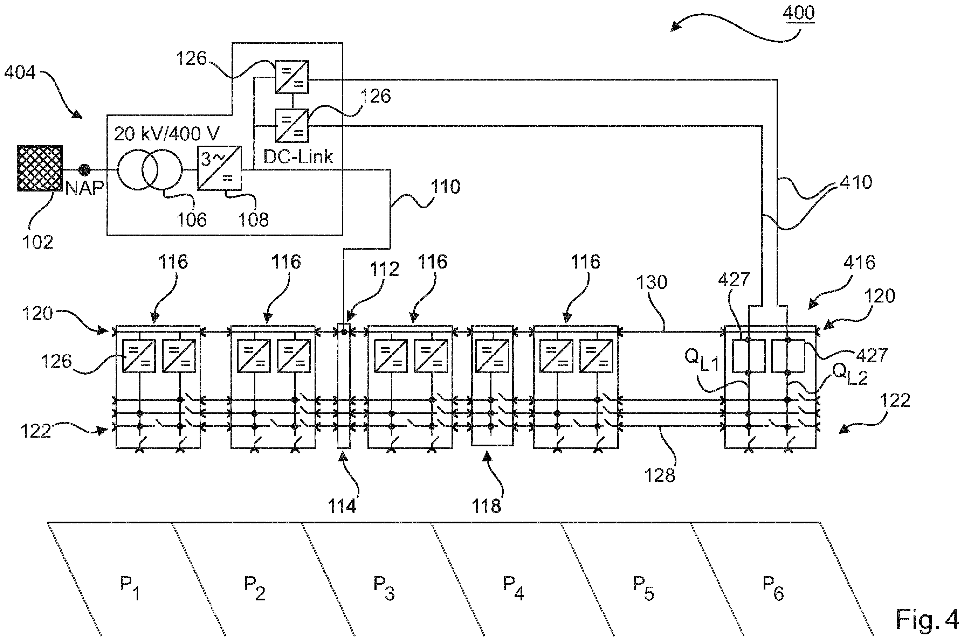

Zur Veranschaulichung zeigt Figur 4 eine zu Figur 1 alternative Ausführungsform einer Ladestation. Zur besseren Übersicht werden für gleiche oder ähnliche Elemente gleiche Bezugszeichen verwendet. Die Ladestation 400 der Figur 4 unterscheidet sich von der Ladestation 100 der Figur 1 darin, dass das ganz rechts dargestellte Ladeterminal 416 statt zweier Gleichstromsteller 126 zwei Stromstellerterminals 427 aufweist. Die Stromstellerterminals 427 erhalten jeweils einen Stromstellerstrom über jeweils eine Individualleitung 410, die jeweils an einem Gleichstromsteller 126 in der Versorgungseinrichtung 404 angeschlossen sind. Die Stromstellerterminals 427 stellen somit im Wesentlichen nur jeweils einen Stromstellerstrom bereit, der durch jeweils einen der beiden Gleichstromsteller 126 erzeugt wurde. Das Bereitstellen erfolgt hier auch an Querleitungen Q_{L1} bzw. Q_{L2}, deren weitere Verschaltung in der Figur 2 näher beschrieben ist. Das ist hier sinngemäß auch auf die Variante der Figur 4 anwendbar. Die beiden Individualleitungen 410 können alternativ auch über das Versorgungsterminal 114 und dann über Versorgungseingänge 120 geführt werden.

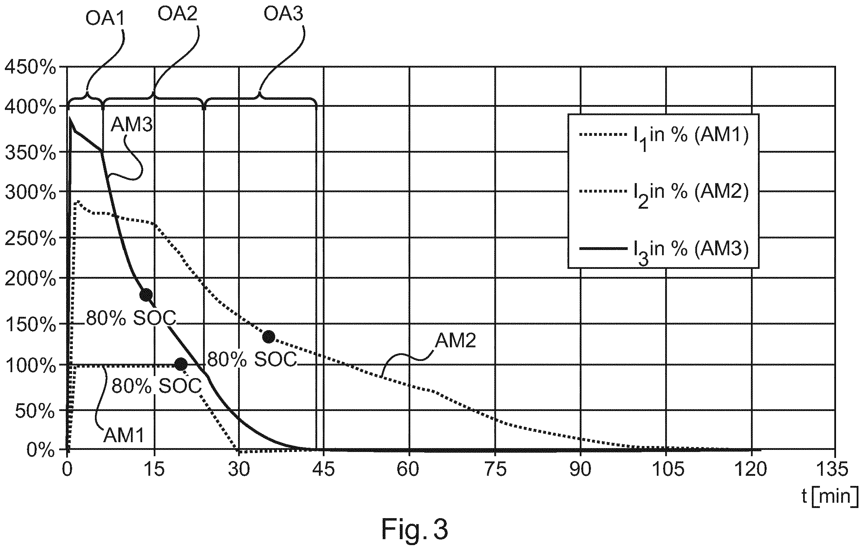

Die Figur 3 zeigt ein Diagramm mit drei unterschiedlichen Ladestromverläufen I₁, I₂ und I₃ in Prozent für jeweils drei verschiedene Fahrzeugklassen AM1, AM2 und AM3. Auf der Ordinate ist dabei die Auslastung der Ladestation in Prozent dargestellt, wobei das Ladeterminal in diesem Beispiel bei 100%-Auslastung einen Ladestrom von 100 A abgeben kann, was dem maximalen Strom der Fahrzeugklasse AM1 entspricht. Auf der Abszisse ist die Zeit t in Minuten dargestellt.

Dabei ist der Verlauf der drei Stromkennlinien I₁, I₂ und I₃ sehr unterschiedlich, wobei jede der drei Kennlinien einer Stromkennlinie einer unterschiedlichen Fahrzeugklasse AM1, AM2 oder AM3 entspricht. Zu der Fahrzeugklasse AM3 ist zu beachten, dass diese eine etwa doppelt so hohe Ladespannung benötigt, wie die Fahrzeugklassen AM1 und AM2. Die 400% Ladestrom, die in Figur 3 anfangs für den Fahrzeugtyp AM3 eingezeichnet sind, entsprechen somit, bezogen auf die Fahrzeugklasse AM1, etwa 800% Ladeleistung. Ebenso werden 80%-SOC-Punkte des Ladezustands (engl. "State of Charge"), die einen Ladezustand von 80% bezogen auf eine vollständige Ladung angeben, zu sehr unterschiedlichen Zeitpunkten erreicht. Der Fahrzeugklasse AM1 könnte beispielsweise einer Kleinwagenklasse entsprechen, die Autoklasse AM2 einer Premiumklasse und die Klasse AM3 einer Supersportwagenklasse entsprechen. Je nach Autoklasse oder Fahrzeugtyp nehmen die Ladekennlinien bzw. Stromkennlinien I₁, I₂ und I₃ einen anderen Verlauf ein. Zwei Stromsteller können parallel (doppelter Strom) oder in Reihe (doppelte Spannung) arbeiten.

Für die Autoklasse AM1 wird beispielsweise ein relativ konstanter Ladestrom von 100 A für etwa 20 Minuten benötigt, sodass ein Ladeterminal mit einem Gleichstromsteller zu 100% ausgelastet ist. Hier wurde also ein Stromsteller bereits ausreichen, der 100A liefern kann. Bei einem Premiumfahrzeug oder einem Sportwagen hingegen könnte ein Ladeterminal alleine nicht den benötigten Ladestrom bereitstellen, um die Fahrzeugtypen aufzuladen. Damit die Gleichstromsteller nicht auf einen Ladestrom von beispielsweise 400 A für den Supersportwagen dimensioniert werden müssen, kann das vorgeschlagene Ladeterminal Gleichstromstellerströme über benachbarte Terminals beziehen, um auch einen Supersportwagen im ersten Ladebereich AO1 laden zu können. Im Ladebereich AO2 fällt der Strombedarf des Supersportwagens dann relativ schnell ab. Nicht benötigte Gleichstromsteller können dann wiederum in Abhängigkeit des Strombedarfs des Fahrzeugs - werden diese nicht mehr benötigt - durch die Steuereinheit freigeben bzw. ab- oder umgeschaltet werden.

Bezogen auf das konkrete Beispiel des Supersportwagens, könnte die Ladestation demnach den Supersportwagen in den ersten knapp 7 Minuten bis 300 % Auslastung mit sieben oder acht Gleichstromstellern gleichzeitig zu je etwa 50 A aufladen. Diese große Anzahl ist nötig, weil der beispielhaft genannte Supersportwagen eine doppelt so hohe Ladespannung benötigt, so dass statt etwa 100A nur etwa 50A je Gleichstromsteller geliefert werden können. Zwischen 300 % und 200 % wären dann nur noch sechs oder fünf Gleichstromsteller nötig, ab 200 % wären nur noch vier oder drei Gleichstromsteller nötig und nach 22.5 Minuten sind dann im Arbeitsbereich AO3 nur noch zwei oder ein Gleichstromsteller nötig, um den Sportwagen vollständig aufzuladen.

## Patentansprüche

1. Ladestation (100) zum Laden mehrerer Elektrofahrzeuge, insbesondere Elektroautomobile, umfassend:
- eine Versorgungseinrichtung (104), insbesondere zum Anschließen an ein elektrisches Versorgungsnetz (102), zum Versorgen der Ladestation mit elektrischer Leistung
- mehrere Ladeterminals (116) zum Laden jeweils wenigstens eines Elektrofahrzeugs, und jedes Ladeterminal umfasst
- einen Versorgungseingang (120) zum Beziehen elektrischer Leistung von der Versorgungseinrichtung,
- einen Ladeausgang (122) mit einem oder mehreren Ladeanschlüssen zum Abgeben jeweils eines Ladestromes zum Laden jeweils eines angeschlossenen Elektrofahrzeugs, und
- wenigstens einen zwischen dem Versorgungseingang und dem Ladeausgang angeordneten Gleichstromsteller (126) um aus der elektrischen Leistung der Versorgungseinrichtung jeweils einen Stromstellerstrom zu erzeugen, oder alternativ wenigstens eines zwischen dem Versorgungseingang und dem Ladeausgang angeordnetes Stromstellerterminal, um einen außerhalb des Ladeterminals von einem Gleichstromsteller erzeugten Stromstellerstrom, insbesondere in der Versorgungseinrichtung erzeugten Stromstellerstrom, bereitzustellen, wobei in jedem Fall
- jeder Ladestrom (I_{L1}, I_{L2}) aus einem Stromstellerstrom oder mehreren Stromstellerströmen (I_{S1}, I_{S2}, Iss) gebildet wird, und wobei
- die Ladeterminals untereinander an Austauschanschlüssen über elektrische Austauschleitungen (128) verbunden sind, um darüber Stromstellerströme untereinander auszutauschen, wobei die Ladestation (100) wenigstens ein Versorgungsterminal (114) aufweist, zum Empfangen elektrischer Leistung von der Versorgungseinrichtung (104) und zum Weiterleiten an die Ladeterminals, und jedes Versorgungsterminal umfasst
- einen über eine Hauptversorgungsleitung (110) mit der Versorgungseinrichtung verbundenen Hauptversorgungseingang (112), um darüber Leistung von der Versorgungseinrichtung zu beziehen, und
- wenigstens einen Versorgungsausgang, um darüber die von der Versorgungseinrichtung bezogene Leistung an die Ladeterminals weiterzuleiten, und wobei
zu Austauschanschlüssen der Ladeterminals entsprechende Austauschanschlüsse an einem ersten und zweiten Verbindungsbereich des Versorgungsterminals vorhanden sind, um an wenigstens einem Verbindungsbereich mit jeweils einem benachbarten Ladeterminal verbunden zu werden, um wenigstens einen Stromstellerstrom durch das Versorgungsterminal hindurchleiten zu können.

2. Ladestation nach Anspruch 1,
**dadurch gekennzeichnet, dass**
die Ladestation (100) wenigstens ein Zusatzstromterminal (118) aufweist, zum Bereitstellen, insbesondere Erzeugen eines oder mehrerer zusätzlicher Stromstellerströme, um diese wenigstens einem Ladeterminal bereitzustellen, wobei das Zusatzstromterminal selbst keinen Ladeausgang aufweist, und jedes Zusatzstromterminal umfasst
- einen dem Versorgungseingang eines Ladeterminals entsprechenden Versorgungseingang zum Beziehen elektrischer Leistung von der Versorgungseinrichtung,
- wenigstens einen dem Austauschanschluss eines Ladeterminals entsprechenden Austauschanschluss zum Übertragen von Stromstellerströmen an wenigstens eines der Ladeterminals, und
- wenigstens einen zwischen dem Versorgungseingang und dem wenigstens einen Austauschanschluss angeordneten und dem oder einem Gleichstromsteller des Ladeterminals entsprechenden Gleichstromsteller um aus der elektrischen Leistung der Versorgungseinrichtung jeweils einen Stromstellerstrom zu erzeugen, oder alternativ wenigstens ein zwischen dem Versorgungseingang und dem wenigstens einen Austauschanschluss angeordnetes und dem oder einem Stromstellerterminal des Ladeterminals entsprechendes Stromstellerterminal, um einen außerhalb des Zusatzstromterminals von einem Gleichstromsteller erzeugten Stromstellerstrom, insbesondere in der Versorgungseinrichtung erzeugten Stromstellerstrom, bereitzustellen, wobei insbesondere
- der Gleichstromsteller bzw. das Stromstellerterminal des Zusatzstromterminals mit allen Austauschanschlüssen des Zusatzstromterminals verbunden ist, um den Stromstellerstrom an allen Austauschleitungen bereitzustellen.

3. Ladestation nach Anspruch 1 oder 2,
**dadurch gekennzeichnet, dass**
- wenigstens einer der Versorgungsausgänge, dazu vorbereitet ist, die von der Versorgungseinrichtung bezogene Leistung an wenigstens ein bzw. das wenigstens eine Zusatzstromterminal weiterzuleiten, oder um Leistung an alle Ladeterminals weiterzuleiten.

4. Ladestation nach einem der vorstehenden Ansprüche,
**dadurch gekennzeichnet, dass** die Ladeterminals, oder wenigstens ein bzw. das wenigstens eine Zusatzstromterminal
- baugleiche Versorgungseingänge (200) aufweisen, so dass jeweils zwei der Versorgungseingänge miteinander verbunden werden, um dadurch jeweils elektrischen Versorgungsstrom oder einen Teil davon von einem Versorgungseingang zu einem benachbarten Versorgungseingang weiterzuleiten, so dass jedes Ladeterminal oder jedes Zusatzstromterminal seinen Versorgungsstrom von einem benachbarten Ladeterminal, Zusatzstromterminal oder Versorgungsterminal erhält, oder dass
- die Versorgungseingänge oder die Austauschanschlüsse jeweils baugleiche Anschlussmittel (220, 224), insbesondere Steckverbinder aufweisen, um von den Ladeterminals, oder Zusatzstromterminals und dem Versorgungsterminal jeweils wahlweise zwei austauschbar miteinander zu verbinden, insbesondere so dass alle miteinander verbundenen Ladeterminals, oder Zusatzstromterminals und das Versorgungsterminal insgesamt einen modularen Aufbau bilden, insbesondere weist das Versorgungsterminal dazu angepasste Austauschanschlüsse oder Versorgungsausgänge auf.

5. Ladestation nach einem der vorstehenden Ansprüche,
**dadurch gekennzeichnet, dass**
- jedes Ladeterminal wenigstens ein steuerbares Schaltmittel aufweist aus der Liste aufweisend
- ein Austauschschaltmittel (A1, A2, A3), das mit jeweils einem Austauschanschluss elektrisch verbunden ist, um den Austausch wenigstens eines Stromstellerstroms über das Austauschmittel mit einem benachbarten Ladeterminal oder Zusatzstromterminal zu steuern,
- ein Ladeschaltmittel (C1, C2), das mit jeweils einem Ladeanschluss elektrisch verbunden ist, um das Abgeben eines Ladestroms an den Ladeanschluss zu steuern, und
- ein Brückenschaltmittel (B1), das mit zwei Gleichstromstellern oder Stromstellerterminals in einem Ladeterminal elektrisch verbunden ist, insbesondere über zwei Querleitungen, um eine Überlagerung der Stromstellerströme der beiden Gleichstromsteller bzw. Stromstellerterminals zu steuern.

6. Ladestation nach einem der vorstehenden Ansprüche,
**dadurch gekennzeichnet, dass**,
- jedes Ladeterminal einen ersten und einen zweiten Verbindungsbereich (204, 206) mit jeweils mehreren, insbesondere gleich vielen, Austauschanschlüssen (224) aufweist,
- - für jeden Austauschanschluss einer der Verbindungsbereiche eine Längsleitung (LL1, LL2, LL3) vorgesehen ist, um den jeweiligen Austauschanschluss des einen Verbindungsbereiches (204) mit jeweils einem Austauschanschluss des anderen Verbindungsbereiches (206) elektrisch zu verbinden, so dass bei m Austauschanschlüssen des einen Verbindungsbereiches m Längsleitungen vorgesehen sind, die insbesondere elektrisch zueinander parallel verlaufen,
- jedem Gleichstromsteller (226) bzw. Stromstellerterminal ein Ladeanschluss (222) zugeordnet ist und für jeden Gleichstromsteller bzw. jedes Stromstellerterminal eine Querleitung (QL1, QL2) vorgesehen ist, um den Gleichstromsteller bzw. das Stromstellerterminal mit dem Ladeanschluss zu verbinden, so dass bei einer Anzahl n Gleichstromstellern bzw. einer Anzahl n Stromstellerterminals eine Anzahl n Querleitungen vorgesehen sind, und wobei wenigstens eine Ausgestaltung vorgesehen ist aus der Liste aufweisend, dass
- jede Längsleitung über einen Verbindungsknoten mit wenigstens einer der Querleitung direkt verbunden ist,
- genau n-1 Brückenschaltmittel vorgesehen sind, um jeweils zwei Querleitungen elektrisch zu verbinden,
- jede Querleitung zu dem Ladeschaltmittel kein weiteres Schaltmittel aufweist,
- in jedem Ladeterminal eine Längsleitung mehr als Querleitungen vorgesehen sind, so dass gilt: m=n+1, und
- eine Längsleitung in dem Ladeterminal
- mit zwei Querleitung jeweils über einen Verbindungsknoten direkt verbunden ist, mit einem der Brückenschaltmittel zwischen den beiden Verbindungsknoten, oder
- mit nur einer Querleitung über einen Verbindungsknoten verbunden ist, ohne in dem Ladeterminal ein Brückenschaltmittel aufzuweisen.

7. Ladestation nach einem der vorstehenden Ansprüche,
**dadurch gekennzeichnet, dass**
- wenigstens eine Steuereinheit vorgesehen ist, die dazu vorbereitet ist, die Ladeterminals (116) derart zu steuern, dass ein Ladestrom eines Ladeterminals aus einem Stromstellerstrom oder mehreren Stromstellerströmen gebildet werden kann, wobei
- der Ladestrom
- aus Stromstellerströmen von wenigstens einem Gleichstromsteller oder Stromstellerterminal desselben Ladeterminals gebildet wird,
- aus Stromstellerströmen von wenigstens einem Gleichstromsteller oder Stromstellerterminal wenigstens eines anderen Ladeterminals gebildet wird,
- aus Stromstellerströmen von wenigstens einem Gleichstromsteller und wenigstens einem Stromstellerterminal mehrerer Ladeterminals gebildet wird, oder
- aus einer Kombination der genannten Stromstellerströme gebildet wird.

8. Ladestation nach einem der vorstehenden Ansprüche,
**dadurch gekennzeichnet, dass**
- die Ladestation (100) so aufgebaut ist, insbesondere über eine bzw. die wenigstens eine Steuereinheit derart ansteuerbar ist, dass
- wenigstens ein Austauschschaltmittel eines Ladeterminals, an dem ein zu ladendes Elektrofahrzeug angeschlossen ist, geschlossen werden kann, um dadurch wenigstens einen Stromstellerstrom von wenigstens einem benachbarten Ladeterminal zu beziehen, um damit einen Ladestrom für das zu ladende Elektrofahrzeug zu erzeugen und/oder
- wenigstens ein Brückenschaltmittel des Ladeterminals an dem das Elektrofahrzeug angeschlossen ist, geschlossen werden kann, um dadurch mehrere Stromstellerströme aus mehreren in dem Ladeterminal angeordneten Gleichstromstromstellern bzw. Stromstellerterminal zum Erzeugen des Ladestroms zusammen zu fügen, und/oder
- wenigstens ein Austauschschaltmittel wenigstens eines benachbarten oder weiteren Ladeterminals und/oder benachbarten oder weiteren Zusatzstromterminals geschlossen werden kann, um dadurch, wenigstens einen Stromstellerstrom aus benachbarten oder weiteren Ladeterminals oder Zusatzstromterminals zum Erzeugen des Ladestroms zu beziehen und zusammenzuführen und/oder
- wenigstens ein Brückenschaltmittel wenigstens eines benachbarten oder weiteren Ladeterminals geschlossen werden kann, um wenigstens einen Stromstellerstrom aus mehreren in dem benachbarten Ladeterminal angeordneten Gleichstromstellern oder Stromstellerterminals zum Erzeugen des Ladestroms über wenigstens eine Austauschleitung zu beziehen.

9. Ladestation nach einem der vorstehenden Ansprüche,
**dadurch gekennzeichnet, dass**
- wenigstens ein Austauschschaltmittel und wenigstens ein Brückenschaltmittel so verschaltbar sind, dass
- ein Stromstellerstrom eines Gleichstromstellers oder Stromstellerterminals eines ersten Ladeterminals oder eines ersten Zusatzstromterminals über eine erste Längsleitung und ein bzw. das wenigstens eine Austauschschaltmittel in ein zweites Ladeterminal fließen kann,
- der Stromstellerstrom in dem zweiten Ladeterminal über einen ersten Verbindungsknoten und eine erste Querleitung zu einer zweiten Längsleitung fließen kann und
- der Stromstellerstrom über einen zweiten Verbindungsknoten, ein bzw. das wenigstens eine Brückenschaltmittel und einen dritten Verbindungsknoten zu einer zweiten Querleitung des zweiten Ladeterminals fließen kann,
- um dort mit wenigstens einem weiteren Stromstellerstrom zum Erzeugen eines Ladestroms zusammengeführt zu werden, insbesondere
- um ein an die zweite Querleitung angeschlossenes Elektrofahrzeug zu laden.

10. Ladestation nach einem der vorstehenden Ansprüche,
**dadurch gekennzeichnet, dass**
- die Ladestation so aufgebaut ist, insbesondere über eine bzw. die wenigstens eine Steuereinheit derart ansteuerbar ist, dass
- die steuerbaren Schaltmittel derart geschaltet werden können, dass ein Ladestrom aus wenigstens 3 Stromstellerströmen, vorzugsweise wenigstens 5 Stromstellerströmen, insbesondere wenigstens 7 Stromstellerströmen gebildet werden kann.

11. Ladestation nach einem der vorstehenden Ansprüche,
**dadurch gekennzeichnet, dass**
- eine bzw. die Steuereinheit das Erzeugen der Ladeströme, insbesondere die Anzahl der an einem Ladeanschluss bereitgestellten Stromstellerströme, abhängig eines Steuerkriteriums steuern kann, ausgewählt aus der Liste aufweisend,
- ein Typ eines an den Ladeanschluss angeschlossen Elektrofahrzeugs,
- ein Speicherzustand des an den Ladeanschluss angeschlossen Elektrofahrzeugs,
- ein speicherzustandsabhängiger Strombedarf des angeschlossenen Elektrofahrzeugs,
- eine Stromanforderung des angeschlossenen Elektrofahrzeugs,
- ein von einem Benutzer angegebener Ladewunsch zum Laden des an den Ladeanschluss angeschlossen Elektrofahrzeugs und
- eine Anzahl verfügbarer Gleichstromsteller, und/oder Stromstellerterminals zum Erzeugen bzw. Bereitstellen von Stromstellerströmen zum Zusammenfügen zum Erzeugung eines Ladestroms.

12. Verfahren zum Laden mehrerer Elektrofahrzeuge, insbesondere Elektroautomobile, mittels einer Ladestation, umfassend die Schritte:
- Versorgen der Ladestation mit elektrischer Leistung über eine Versorgungseinrichtung der Ladestation;
- Laden jeweils wenigstens eines Elektrofahrzeugs mittels eines von mehreren Ladeterminals der Ladestation mit den Schritten
- Beziehen elektrischer Leistung von der Versorgungseinrichtung an einem Versorgungseingang des Ladeterminals,
- Abgeben jeweils eines Ladestromes zum Laden des angeschlossenen Elektrofahrzeugs an einen Ladeausgang mit einem oder mehreren Ladeanschlüssen, wobei das Elektrofahrzeug an einem der Ladeanschlüsse angeschlossen ist, an den der Ladestrom abgegeben wird, und wobei
- wenigstens einer zwischen dem Versorgungseingang und dem Ladeausgang angeordneter Gleichstromsteller aus elektrischer Leistung der Versorgungseinrichtung jeweils einen Stromstellerstrom erzeugt, oder wenigstens ein zwischen dem Versorgungseingang und dem Ladeausgang angeordnetes Stromstellerterminal jeweils einen durch jeweils einen außerhalb des Ladeterminals von einem Gleichstromsteller erzeugten Stromstellerstrom, insbesondere in der Versorgungseinrichtung erzeugten Stromstellerstrom bereitstellt, und in jedem Fall
- der Ladestrom aus einem Stromstellerstrom oder mehreren Stromstellerströmen gebildet wird, und wobei
- die Ladeterminals untereinander an Austauschanschlüssen über elektrische Austauschleitungen verbunden sind, und wahlweise
- darüber Stromstellerströme untereinander austauschen, wobei
- das Verfahren eine Ladestation (100) verwendet, die wenigstens ein Versorgungsterminal (114) aufweist, zum Empfangen elektrischer Leistung von der Versorgungseinrichtung (104) und zum Weiterleiten an die Ladeterminals, und jedes Versorgungsterminal umfasst
- einen über eine Hauptversorgungsleitung (110) mit der Versorgungseinrichtung verbundenen Hauptversorgungseingang (112), um darüber Leistung von der Versorgungseinrichtung zu beziehen, und
- wenigstens einen Versorgungsausgang, um darüber die von der Versorgungseinrichtung bezogene Leistung an die Ladeterminals weiterzuleiten, und wobei
- zu Austauschanschlüssen der Ladeterminals entsprechende Austauschanschlüsse an einem ersten und zweiten Verbindungsbereich des Versorgungsterminals vorhanden sind, um an wenigstens einem Verbindungsbereich mit jeweils einem benachbarten Ladeterminal verbunden zu werden, um wenigstens einen Stromstellerstrom durch das Versorgungsterminal hindurchleiten zu können.

13. Verfahren nach Anspruch 12, **dadurch gekennzeichnet, dass** eine Ladestation nach einem der Ansprüche 1 bis 11 verwendet wird.

14. Verfahren nach Anspruch 12 oder 13,
**dadurch gekennzeichnet, dass**
- wenigstens ein Austauschschaltmittel eines Ladeterminals, an dem ein zu ladendes Elektrofahrzeug angeschlossen ist, geschlossen wird, und dadurch wenigstens ein Stromstellerstrom von wenigstens einem benachbarten Ladeterminal bezogen wird, und damit einen Ladestrom für das zu ladende Elektrofahrzeug erzeugt wird und/oder
- wenigstens ein Brückenschaltmittel des Ladeterminals an dem das Elektrofahrzeug angeschlossen ist, geschlossen ist, und dadurch mehrere Stromstellerströme aus mehreren in dem Ladeterminal angeordneten Gleichstromstromstellern oder Stromstellerterminals zum Erzeugen des Ladestroms zusammengefügt bzw. überlagert werden, und/oder
- wenigstens ein Austauschschaltmittel wenigstens eines benachbarten oder weiteren Ladeterminals und/oder benachbarten oder weiteren Zusatzstromterminals geschlossen ist, und dadurch, wenigstens ein Stromstellerstrom aus benachbarten oder weiteren Ladeterminals oder Zusatzstromterminals zum Erzeugen des Ladestroms bezogen und zusammengeführt bzw. überlagert wird und/oder
- wenigstens ein Brückenschaltmittel wenigstens eines benachbarten oder weiteren Ladeterminals geschlossen ist, und dadurch wenigstens ein Stromstellerstrom aus mehreren in dem benachbarten Ladeterminal angeordneten Gleichstromstellern bzw. Stromstellerterminals zum Erzeugen des Ladestroms über wenigstens eine Austauschleitung bezogen wird.

## Claims

1. A charging station (100) for charging a plurality of electric vehicles, in particular electric automobiles, comprising:
- a supply device (104), in particular for connection to an electricity supply grid (102), for supplying the charging station with electric power
- a plurality of charging terminals (116) for charging in each case at least one electric vehicle, and each charging terminal comprises
- a supply input (120) for drawing electric power from the supply device,
- a charging output (122) with one or more charging connections for outputting a respective charging current in order to charge a respective connected electric vehicle, and
- at least one DC chopper (126) arranged between the supply input and the charging output in order to generate a respective chopper current from the electric power of the supply device, or as an alternative at least one chopper terminal arranged between the supply input and the charging output in order to provide a chopper current generated outside the charging terminal by a DC chopper, in particular chopper current generated in the supply device, wherein, in any case
- each charging current (I_{L1}, I_{L2}) is formed from a chopper current or a plurality of chopper currents (I_{S1}, I_{S2}, I_{S3}), and wherein
- the charging terminals are connected to one another at exchange connections via electrical exchange lines (128) in order thereby to exchange chopper currents with one another, wherein the charging station (100) has at least one supply terminal (114) for receiving electric power from the supply device (104) and for forwarding it to the charging terminals, and each supply terminal comprises
- a main supply input (112) connected to the supply device via a main supply line (110) in order thereby to draw power from the supply device, and
- at least one supply output in order to forward the power drawn from the supply device to the charging terminals, and wherein
exchange connections corresponding to exchange connections of the charging terminals are present at a first and second connection area of the supply terminal in order to be connected at at least one connection area to a respective adjacent charging terminal in orderto be able to route at least one chopper current through the supply terminal.

2. The charging station as claimed in claim 1,
**characterized in that**
the charging station (100) has at least one auxiliary current terminal (118) for providing, in particular generating, one or more additional chopper currents in order to provide these to at least one charging terminal, wherein the auxiliary current terminal itself does not have a charging output, and each auxiliary current terminal comprises
- a supply input corresponding to the supply input of a charging terminal for drawing electric power from the supply device,
- at least one exchange connection corresponding to the exchange connection of a charging terminal for transmitting chopper currents to at least one of the charging terminals, and
- at least one DC chopper arranged between the supply input and the at least one exchange connection and corresponding to the or a DC chopper of the charging terminal in order to generate a respective chopper current from the electric power of the supply device, or as an alternative at least one chopper terminal arranged between the supply input and the at least one exchange connection and corresponding to the or a chopper terminal of the charging terminal in order to provide a chopper current generated outside the auxiliary current terminal by a DC chopper, in particular chopper current generated in the supply device, wherein, in particular
- the DC chopper or the chopper terminal of the auxiliary current terminal is connected to all of the exchange connections of the auxiliary current terminal in order to provide the chopper current to all of the exchange lines.

3. The charging station as claimed in claim 1 or 2,
**characterized in that**
- at least one of the supply outputs is prepared to forward the power drawn from the supply device to at least one or the at least one auxiliary current terminal, or to forward power to all of the charging terminals.

4. The charging station as claimed in one of the preceding claims,
**characterized in that** the charging terminals, or at least one or the at least one auxiliary current terminal
- have structurally identical supply inputs (200), such that in each case two of the supply inputs are connected to one another in order thereby to forward respective electric supply current or a portion thereof from a supply input to an adjacent supply input, such that each charging terminal or each auxiliary current terminal receives its supply current from an adjacent charging terminal, auxiliary current terminal or supply terminal, or **in that**
- the supply inputs or the exchange connections each have structurally identical connection means (220, 224), in particular plug connectors, in order to interchangeably connect, in each case selectively, two of the charging terminals, or auxiliary current terminals and the supply terminal to one another, in particular such that all of the charging terminals, or auxiliary current terminals and the supply terminal connected to one another as a whole form a modular structure, the supply terminal in particular having exchange connections or supply outputs adapted for this purpose.

5. The charging station as claimed in one of the preceding claims,
**characterized in that**
- each charging terminal has at least one controllable switching means from the list comprising
- an exchange switching means (A1, A2, A3) that is electrically connected to a respective exchange connection in order to control the exchange of at least one chopper current via the exchange means with an adjacent charging terminal or auxiliary current terminal,
- a charging switching means (C1, C2) that is electrically connected to a respective charging connection in order to control the output of a charging current to the charging connection, and
- a bridge switching means (B1) that is electrically connected to two DC choppers or chopper terminals in a charging terminal, in particular via two transverse lines, in orderto control a superimposition of the chopper currents of the two DC choppers or chopper terminals.

6. The charging station as claimed in one of the preceding claims,
**characterized in that**
- each charging terminal has a first and a second connection area (204, 206), each with a plurality, in particular the same number, of exchange connections (224),
- a longitudinal line (LL1, LL2, LL3) is provided for each exchange connection of one of the connection areas in order to electrically connect the respective exchange connection of one connection area (204) to a respective exchange connection of the other connection area (206), such that, with m exchange connections of one connection area, m longitudinal lines that in particular run electrically in parallel with one another are provided,
- a charging connection (222) is assigned to each DC chopper (226) or chopper terminal and a transverse line (QL1, QL2) is provided for each DC chopper or each chopper terminal in order to connect the DC chopper or the chopper terminal to the charging connection, such that, with a number of n DC choppers or a number of n chopper terminals, a number of n transverse lines are provided, and wherein at least one embodiment is provided from the list comprising, that
- each longitudinal line is connected directly to at least one of the transverse lines via a connection node,
- exactly n-1 bridge switching means are provided in order to electrically connect in each case two transverse lines,
- each transverse line to the charging switching means has no further switching means
- one longitudinal line more than transverse lines is provided in each charging terminal, such that the following applies: m=n+1, and
- a longitudinal line in the charging terminal
- is connected directly to two transverse lines via a respective connection node, with one of the bridge switching means between the two connection nodes, or
- is connected to just one transverse line via a connection node, without having a bridge switching means in the charging terminal.

7. The charging station as claimed in one of the preceding claims,
**characterized in that**
- at least one control unit is provided, which control unit is designed to control the charging terminals (116) such that a charging current of a charging terminal is able to be formed from one chopper current or a plurality of chopper currents, wherein
- the charging current
- is formed from chopper currents from at least one DC chopper or chopper terminal of the same charging terminal,
- is formed from chopper currents from at least one DC chopper or chopper terminal of at least one other charging terminal,
- is formed from chopper currents from at least one DC chopper and at least one chopper terminal of a plurality of charging terminals, or
- is formed from a combination of the aforementioned chopper currents.

8. The charging station as claimed in one of the preceding claims,
**characterized in that**
- the charging station (100) is constructed such that it is able to be driven in particular via one or the at least one control unit such that
- at least one exchange switching means of a charging terminal to which an electric vehicle to be charged is connected is able to be closed in order thereby to draw at least one chopper current from at least one adjacent charging terminal in order thereby to generate a charging current for the electric vehicle to be charged and/or
- at least one bridge switching means of the charging terminal to which the electric vehicle is connected is able to be closed in order thereby to combine a plurality of chopper currents from a plurality of DC choppers or chopper terminals arranged in the charging terminal in order to generate the charging current, and/or
- at least one exchange switching means of at least one adjacent or further charging terminal and/or adjacent or further auxiliary current terminal is able to be closed in order thereby to draw and combine at least one chopper current from adjacent or further charging terminals or auxiliary current terminals in order to generate the charging current and/or
- at least one bridge switching means of at least one adjacent or further charging terminal is able to be closed in order to draw at least one chopper current from a plurality of DC choppers or chopper terminals arranged in the adjacent charging terminal via at least one exchange line in order to generate the charging current.

9. The charging station as claimed in one of the preceding claims,
**characterized in that**
- at least one exchange switching means and at least one bridge switching means are able to be interconnected such that
- a chopper current of a DC chopper or chopper terminal of a first charging terminal or of a first auxiliary current terminal is able to flow via a first longitudinal line and one or the at least one exchange switching means into a second charging terminal,
- the chopper current in the second charging terminal may flow via a first connection node and a first transverse line to a second longitudinal line and
- the chopper current may flow via a second connection node, one or the at least one bridge switching means and a third connection node to a second transverse line of the second charging terminal,
- in order to be combined there with at least one further chopper current in order to generate a charging current, in particular
- in order to charge an electric vehicle connected to the second transverse line.

10. The charging station as claimed in one of the preceding claims,
**characterized in that**
- the charging station is constructed such that it is able to be driven in particular via one or the at least one control unit such that
- the controllable switching means are able to be switched in such a way that a charging current is able to be formed from at least 3 chopper currents, preferably at least 5 chopper currents, in particular at least 7 chopper currents.

11. The charging station as claimed in one of the preceding claims,
**characterized in that**
- one or the control unit is able to control the generation of the charging currents, in particular the number of chopper currents provided at a charging connection, depending on a control criterion selected from the list comprising
- a type of electric vehicle connected to the charging connection,
- a storage state of the electric vehicle connected to the charging connection,
- a storage state-dependent current requirement of the connected electric vehicle,
- a current request of the connected electric vehicle,
- a charging wish specified by a user for charging the electric vehicle connected to the charging connection, and
- a number of available DC choppers and/or chopper terminals for generating or providing chopper currents to be combined in order to generate a charging current.

12. A method for charging a plurality of electric vehicles, in particular electric automobiles, by way of a charging station, comprising the steps of:
- supplying the charging station with electric power via a supply device of the charging station;
- charging in each case at least one electric vehicle by way of one of a plurality of charging terminals of the charging station, involving the steps of
- drawing electric power from the supply device at a supply input of the charging terminal,
- outputting a respective charging current for charging the connected electric vehicle at a charging output with one or more charging connections, wherein the electric vehicle is connected to one of the charging connections at which the charging current is output, and wherein
- at least one DC chopper arranged between the supply input and the charging output generates a respective chopper current from electric power of the supply device, or at least one chopper terminal arranged between the supply input and the charging output in each case provides a chopper current generated outside the charging terminal by a respective DC chopper, in particular chopper current generated in the supply device, and in any case
- the charging current is formed from a chopper current or a plurality of chopper currents, and wherein
- the charging terminals are connected to one another at exchange connections via electrical exchange lines, and optionally
- thereby exchange chopper currents with one another, wherein
- the method uses a charging station (100) having at least one supply terminal (114) for receiving electric power from the supply device (104) and for forwarding it to the charging terminals, and each supply terminal comprises
- a main supply input (112) connected to the supply device via a main supply line (110) in order thereby to draw power from the supply device, and
- at least one supply output in order thereby to forward the power drawn from the supply device to the charging terminals, and wherein
- exchange connections corresponding to exchange connections of the charging terminals are present at a first and second connection area of the supply terminal in order to be connected at at least one connection area to a respective adjacent charging terminal in order to be able to route at least one chopper current through the supply terminal.

13. The method as claimed in claim 12, **characterized in that** a charging station as claimed in one of claims 1 to 11 is used.

14. The method as claimed in claim 12 or 13,
**characterized in that**
- at least one exchange switching means of a charging terminal to which an electric vehicle to be charged is connected is closed, and
at least one chopper current is thereby drawn from at least one adjacent charging terminal, and a charging current is thus generated for the electric vehicle to be charged and/or
- at least one bridge switching means of the charging terminal to which the electric vehicle is connected is closed, and a plurality of chopper currents from a plurality of DC choppers or chopper terminals arranged in the charging terminal are thereby combined or superimposed in order to generate the charging current, and/or
- at least one exchange switching means of at least one adjacent or further charging terminal and/or adjacent or further auxiliary current terminal is closed, and at least one chopper current is thereby drawn from adjacent or further charging terminals or auxiliary current terminals and combined or superimposed in order to generate the charging current and/or
- at least one bridge switching means of at least one adjacent or further charging terminal is closed, and at least one chopper current from a plurality of DC choppers or chopper terminals arranged in the adjacent charging terminal is thereby drawn via at least one exchange line in order to generate the charging current.

## Revendications

1. Station de charge (100) pour la charge de plusieurs véhicules électriques, en particulier de véhicules automobiles électriques, comprenant :
- un dispositif d'alimentation (104), en particulier pour le raccordement à un réseau d'alimentation (102) électrique, pour l'alimentation de la station de charge en une puissance électrique,
- plusieurs bornes de charge (116) pour la charge respectivement d'au moins un véhicule électrique, et chaque borne de charge comprend
-- une entrée d'alimentation (120) pour tirer de la puissance électrique du dispositif d'alimentation,
-- une sortie de charge (122) avec une ou plusieurs prises de charge pour délivrer respectivement un courant de charge pour la charge respectivement d'un véhicule électrique raccordé, et
-- au moins un régulateur de courant continu (126) agencé entre l'entrée d'alimentation et la sortie de charge afin de générer, à partir de la puissance électrique du dispositif d'alimentation respectivement un courant de régulateur de courant, ou en variante au moins une borne de régulateur de courant agencée entre l'entrée d'alimentation et la sortie de charge afin de fournir un courant de régulateur de courant généré en dehors de la borne de charge par un régulateur de courant continu, en particulier le courant de régulateur de courant généré dans le dispositif d'alimentation, dans lequel, dans chaque cas
-- chaque courant de charge (I_{L1}, I_{L2}) est formé à partir d'un courant de régulateur de courant ou de plusieurs courants de régulateur de courant (I_{S1}, I_{S2}, I_{S3}), et dans laquelle
-- les bornes de charge sont reliées entre elles au niveau de prises d'échange par le biais de conduites d'échange (128) électriques afin d'échanger entre elles des courants de régulateur de courant par leur biais, dans laquelle
la station de charge (100) présente au moins une borne d'alimentation (114), pour la réception de puissance électrique du dispositif d'alimentation (104) et pour la transmission aux bornes de charge, et chaque borne d'alimentation comprend
-- une entrée d'alimentation principale (112) reliée par le biais d'une conduite d'alimentation principale (110), au dispositif d'alimentation afin de tirer par son biais de la puissance du dispositif d'alimentation, et
-- au moins une sortie d'alimentation afin de transmettre par son biais la puissance tirée du dispositif d'alimentation aux bornes de charge, et dans laquelle
des prises d'échange correspondant aux prises d'échange des bornes de charge au niveau d'une première et seconde zone de liaison de la borne d'alimentation sont présentes afin d'être reliées au niveau d'au moins une zone de liaison à respectivement une borne de charge contiguë afin de pouvoir faire passer au moins un courant de régulateur de courant par la borne d'alimentation.

2. Station de charge selon la revendication 1,
**caractérisée en ce que**
la station de charge (100) présente au moins une borne de courant supplémentaire (118) pour la fourniture, en particulier la génération, d'un ou de plusieurs courants de régulateur de courant supplémentaires afin de le(s) fournir à au moins une borne de charge, dans laquelle la borne de courant supplémentaire elle-même ne présente aucune sortie de charge, et chaque borne de courant supplémentaire comprend
- une entrée d'alimentation correspondant à l'entrée d'alimentation d'une borne de charge pour tirer de la puissance électrique du dispositif d'alimentation,
- au moins une prise d'échange correspondant à la prise d'échange d'une borne de charge pour la transmission de courants de régulateur de courant à au moins une des bornes de charge, et
- au moins un régulateur de courant continu agencé entre l'entrée d'alimentation et l'au moins une prise d'échange et correspondant au ou à un régulateur de courant continu de la borne de charge afin de générer à partir de la puissance électrique du dispositif d'alimentation respectivement un courant de régulateur de courant, ou en variante au moins une borne de régulateur de courant agencée entre l'entrée d'alimentation et l'au moins une prise d'échange et correspondant à la ou une borne de régulateur de courant de la borne de charge afin de fournir un courant de régulateur de courant généré en dehors de la borne de courant supplémentaire d'un régulateur de courant continu, en particulier le courant de régulateur de courant généré dans le dispositif d'alimentation, dans lequel en particulier
- le régulateur de courant continu ou la borne de régulateur de courant de la borne de courant supplémentaire est relié(e) à toutes les prises d'échange de la borne de courant supplémentaire afin de fournir le courant de régulateur de courant à toutes les conduites d'échange.

3. Station de charge selon la revendication 1 ou 2,
**caractérisée en ce que**
- au moins une des sorties d'alimentation est préparée afin de transmettre la puissance tirée par le dispositif d'alimentation à au moins une ou l'au moins une borne de courant supplémentaire ou afin de transmettre de la puissance à toutes les bornes de charge.

4. Station de charge selon l'une quelconque des revendications précédentes,
**caractérisée en ce que** les bornes de charge ou au moins une ou l'au moins une borne de courant supplémentaire
- présentent des entrées d'alimentation (200) de même construction de sorte que respectivement deux des entrées d'alimentation soient reliées entre elles afin de transmettre ainsi respectivement un courant d'alimentation électrique ou une partie de celui-ci d'une entrée d'alimentation à une entrée d'alimentation contiguë de sorte que chaque borne de charge ou chaque borne de courant supplémentaire reçoive son courant d'alimentation d'une borne de charge contiguë, borne de courant supplémentaire ou borne d'alimentation, ou que
- les entrées d'alimentation ou les prises d'échange présentent respectivement des moyens de raccordement de même construction (220, 224), en particulier des connecteurs enfichables, afin de relier entre elles parmi les bornes de charge, ou bornes de courant supplémentaire et la borne d'alimentation respectivement au choix deux de manière échangeable, en particulier de sorte que toutes les bornes de charge reliées entre elles, ou bornes de courant supplémentaire et la borne d'alimentation forment dans l'ensemble une structure modulaire, en particulier la borne d'alimentation présente des prises d'échange ou sorties d'alimentation adaptées à celle-ci.

5. Station de charge selon l'une quelconque des revendications précédentes,
**caractérisée en ce que**
- chaque borne de charge présente au moins un moyen de commutation commandable à partir de la liste présentant
-- un moyen de commutation d'échange (A1, A2, A3) qui est relié électriquement à respectivement une prise d'échange afin de commander l'échange au moins d'un courant de régulateur de courant par le biais du moyen d'échange avec une borne de charge ou borne de courant supplémentaire contigüe,
-- un moyen de commutation de charge (C1, C2) qui est relié électriquement à respectivement une prise de charge afin de commander la délivrance d'un courant de charge à la prise de charge, et
-- un moyen de commutation de pont (B1) qui est relié électriquement à deux régulateurs de courant continu ou bornes de régulateur de courant dans une borne de charge, en particulier par le biais de deux conduites transversales, afin de commander une superposition des courants de régulateur de courant des deux régulateurs de courant continu ou bornes de régulateur de courant.

6. Station de charge selon l'une quelconque des revendications précédentes,
**caractérisée en ce que**
- chaque borne de charge présente une première et une seconde zone de liaison (204, 206) avec respectivement plusieurs, en particulier un nombre égal de prises d'échange (224),
-- pour chaque prise d'échange d'une des zones de liaison une conduite longitudinale (LL1, LL2, LL3) est prévue afin de relier électriquement la prise d'échange respective de l'une zone de liaison (204) à respectivement une prise d'échange de l'autre zone de liaison (206) de sorte que pour m prises d'échange de l'une zone de liaison m conduites longitudinales soient prévues, lesquelles s'étendent en particulier électriquement parallèlement les unes aux autres,
- à chaque régulateur de courant continu (226) ou borne de régulateur de courant est associée une prise de charge (222) et pour chaque régulateur de courant continu ou chaque borne de régulateur de courant est prévue une conduite transversale (QL1, QL2) afin de relier le régulateur de courant continu ou la borne de régulateur de courant à la prise de charge de sorte que pour un nombre n de régulateurs de courant continu ou un nombre n de bornes de régulateur de courant un nombre n de conduites transversales soient prévues, et dans laquelle au moins une configuration est prévue à partir de la liste présentant que
-- chaque conduite longitudinale est reliée directement par le biais d'un noeud de liaison à au moins une de la conduite transversale,
-- précisément n-1 moyens de commutation de pont sont prévus afin de relier électriquement respectivement deux conduites transversales,
-- chaque conduite transversale menant au moyen de commutation de charge ne présente aucun autre moyen de commutation,
-- dans chaque borne de charge une conduite longitudinale est prévue plutôt que des conduites transversales de sorte que s'applique : m=n+1, et
-- une conduite longitudinale dans la borne de charge
--- est reliée directement à deux conduites transversales respectivement par le biais d'un noeud de liaison, avec un des moyens de commutation de pont entre les deux noeuds de liaison, ou
--- est reliée à une seule conduite transversale par le biais d'un noeud de liaison sans présenter dans la borne de charge de moyen de commutation de pont.

7. Station de charge selon l'une quelconque des revendications précédentes,
**caractérisée en ce que**
- au moins une unité de commande est prévue, laquelle est préparée afin de commander les bornes de charge (116) de telle manière qu'un courant de charge d'une borne de charge puisse être formé à partir d'un courant de régulateur de courant ou de plusieurs courants de régulateur de courant, dans laquelle
- le courant de charge
-- est formé à partir de courants de régulateur de courant d'au moins un régulateur de courant continu ou borne de régulateur de courant de la même borne de charge,
-- est formé à partir de courants de régulateur de courant d'au moins un régulateur de courant continu ou borne de régulateur de courant au moins d'une autre borne de charge,
-- est formé à partir de courants de régulateur de courant d'au moins un régulateur de courant continu et au moins une borne de régulateur de courant de plusieurs bornes de charge, ou
-- est formé à partir d'une combinaison des courants de régulateur de courant cités.

8. Station de charge selon l'une quelconque des revendications précédentes,
**caractérisée en ce que**
- la station de charge (100) est constituée ainsi, en particulier est commandable par le biais d'une ou de l'au moins une unité de commande de telle manière que
-- au moins un moyen de commutation d'échange d'une borne de charge, à laquelle un véhicule électrique à charger est raccordé, puisse être fermé afin de tirer ainsi au moins un courant de régulateur de courant d'au moins une borne de charge contiguë afin de générer ainsi un courant de charge pour le véhicule électrique à charger et/ou
-- au moins un moyen de commutation de pont de la borne de charge, auquel est raccordé le véhicule électrique, puisse être fermé afin d'assembler ainsi plusieurs courants de régulateur de courant à partir de plusieurs régulateurs de courant continu ou bornes de régulateur de courant agencées dans la borne de charge pour la génération du courant de charge, et/ou
-- au moins un moyen de commutation d'échange au moins d'une borne de charge contiguë ou autre et/ou bornes de courant supplémentaire contigües ou autres puisse être fermé afin de tirer et assembler ainsi au moins un courant de régulateur de courant à partir de bornes de charge contigües ou autres ou bornes de courant supplémentaire pour la génération du courant de charge et/ou
-- au moins un moyen de commutation de pont au moins d'une borne de charge contiguë ou autre puisse être fermé afin de tirer au moins un courant de régulateur de courant à partir de plusieurs régulateurs de courant continu agencés dans la borne de charge contigüe ou bornes de régulateur de courant pour la génération du courant de charge par le biais d'au moins une conduite d'échange.

9. Station de charge selon l'une quelconque des revendications précédentes,
**caractérisée en ce que**
- au moins un moyen de commutation d'échange et au moins un moyen de commutation de pont sont câblés de sorte que
-- un courant de régulateur de courant d'un régulateur de courant continu ou d'une borne de régulateur de courant d'une première borne de charge ou d'une première borne de courant supplémentaire puisse circuler par le biais d'une première conduite longitudinale et un ou l'au moins un moyen de commutation d'échange dans une seconde borne de charge,
-- le courant de régulateur de courant puisse circuler dans la seconde borne de charge par le biais d'un premier noeud de liaison et une première conduite transversale vers une seconde conduite longitudinale et
-- le courant de régulateur de courant puisse circuler par le biais d'un deuxième noeud de liaison, un ou l'au moins un moyen de commutation de pont et un troisième noeud de liaison à une seconde conduite transversale de la seconde borne de charge,
-- afin d'y être assemblé avec au moins un autre courant de régulateur de courant pour la génération d'un courant de charge, en particulier
-- afin de charger un véhicule électrique raccordé à la seconde conduite transversale.

10. Station de charge selon l'une quelconque des revendications précédentes,
**caractérisée en ce que**
- la station de charge est constituée ainsi, est commandable en particulier par le biais d'une ou l'au moins une unité de commande de telle manière que
- les moyens de commutation commandables puissent être commutés de telle manière qu'un courant de charge puisse être formé à partir d'au moins 3 courants de régulateur de courant, de préférence d'au moins 5 courants de régulateur de courant, en particulier d'au moins 7 courants de régulateur de courant.

11. Station de charge selon l'une quelconque des revendications précédentes,
**caractérisée en ce que**
- une ou l'unité de commande peut commander la génération des courants de charge, en particulier le nombre de courants de régulateur de courant fournis à une prise de charge, en fonction d'un critère de commande, sélectionné à partir de la liste présentant
- un type d'un véhicule électrique raccordé à la prise de charge,
- un état d'accumulateur du véhicule électrique raccordé à la prise de charge,
- un besoin en courant dépendant de l'état d'accumulateur du véhicule électrique raccordé,
- une exigence de courant du véhicule électrique raccordé,
- un souhait de charge indiqué par un utilisateur pour la charge du véhicule électrique raccordé à la prise de charge et
- un nombre de régulateurs de courant continu et/ou de bornes de régulateur de courant disponibles pour la génération ou la fourniture de courants de régulateur de courant pour l'assemblage pour la génération d'un courant de charge.

12. Procédé de charge de plusieurs véhicules électriques, en particulier véhicules automobiles électriques, au moyen d'une station de charge, comprenant les étapes suivantes :
- l'alimentation de la station de charge en une puissance électrique par le biais d'un dispositif d'alimentation de la station de charge ;
- la charge respectivement au moins d'un véhicule électrique au moyen d'une des plusieurs bornes de charge de la station de charge avec les étapes suivantes :
-- le tirage de la puissance électrique du dispositif d'alimentation à une entrée d'alimentation de la borne de charge,
-- la délivrance respectivement d'un courant de charge pour la charge du véhicule électrique raccordé à une sortie de charge avec une ou plusieurs prises de charge, dans lequel le véhicule électrique est raccordé à une des prises de charge, à laquelle le courant de charge est délivré, et dans lequel
-- au moins un régulateur de courant continu agencé entre l'entrée d'alimentation et la sortie de charge génère à partir de la puissance électrique du dispositif d'alimentation respectivement un courant de régulateur de courant, ou au moins une borne de régulateur de courant agencée entre l'entrée d'alimentation et la sortie de charge fournit respectivement un courant de régulateur de courant généré par respectivement un courant de régulateur de courant généré en dehors de la borne de charge par un régulateur de courant continu, en particulier le courant de régulateur de courant généré dans le dispositif d'alimentation, et dans chaque cas
-- le courant de charge est formé à partir d'un courant de régulateur de courant ou de plusieurs courants de régulateur de courant, et dans lequel
-- les bornes de charge sont reliées entre elles au niveau de prises d'échange par le biais de conduites d'échange électriques, et au choix
-- échangent des courants de régulateur de courant entre elles par leur biais, dans lequel
-- le procédé utilise une station de charge (100) qui présente au moins une borne d'alimentation (114) pour la réception de puissance électrique du dispositif d'alimentation (104) et pour la transmission à la borne de charge, et chaque borne d'alimentation comprend
--- une entrée d'alimentation principale (112) reliée, par le biais d'une conduite d'alimentation principale (110), au dispositif d'alimentation afin de tirer par son biais de la puissance du dispositif d'alimentation, et
--- au moins une sortie d'alimentation afin de transmettre par son biais la puissance tirée du dispositif d'alimentation aux bornes de charge, et dans lequel
--- des prises d'échange correspondant aux prises d'échange des bornes de charge sont présentes au niveau d'une première et seconde zone de liaison de la borne d'alimentation afin d'être reliées au niveau d'au moins une zone de liaison à respectivement une borne de charge contiguë afin de pouvoir faire passer au moins un courant de régulateur de courant par la borne d'alimentation.

13. Procédé selon la revendication 12, **caractérisé en ce qu'**une station de charge selon l'une quelconque des revendications 1 à 11 est utilisée.

14. Procédé selon la revendication 12 ou 13, **caractérisé en ce que**
- au moins un moyen de commutation d'échange d'une borne de charge, à laquelle un véhicule électrique à charger est raccordé, est fermé, et
au moins un courant de régulateur de courant est tiré ainsi par au moins une borne de charge contiguë, et ainsi un courant de charge est généré pour le véhicule électrique à charger et/ou
- au moins un moyen de commutation de pont de la borne de charge, à laquelle le véhicule électrique est raccordé, est fermé, et ainsi plusieurs courants de régulateur de courant sont assemblés ou superposés à partir de plusieurs régulateurs de courant continu ou bornes de régulateur de courant agencés dans la borne de charge pour la génération du courant de charge, et/ou
- au moins un moyen de commutation d'échange d'au moins une borne de charge contiguë ou autre et/ou borne de courant supplémentaire contigüe ou autre est fermé et ainsi, au moins un courant de régulateur de courant est tiré et assemblé ou superposé à partir de bornes de charge contiguës ou autres ou bornes de courant supplémentaires pour la génération du courant de charge et/ou
- au moins un moyen de commutation de pont au moins d'une borne de charge contigüe ou autre est fermé, et ainsi au moins un courant de régulateur de courant est tiré à partir de plusieurs régulateurs de courant continu ou bornes de régulateur de courant agencées dans la borne de charge contiguë pour la génération du courant de charge par le biais d'au moins une conduite d'échange.
